# EUROPÄISCHE PATENTSCHRIFT

(11) **EP 3 772 396 B1**
(45) Veröffentlichungstag und Bekanntmachung des Hinweises auf die Patenterteilung: **06.05.2026**
(21) Anmeldenummer: 20183125.2
(22) Anmeldetag: 30.06.2020
(51) Int. Cl.: B25J 9/16, B25J 19/02, B25J 19/06, F16P 3/14

(54) **VERFAHREN ZUR RECHNERGESTÜTZTEN ERFASSUNG UND AUSWERTUNG EINES ARBEITSABLAUFS, BEI DEM EIN MENSCHLICHER WERKER UND EIN ROBOTISCHES SYSTEM WECHSELWIRKEN**
METHOD FOR COMPUTER-ASSISTED DETECTION AND EVALUATION OF A WORK CYCLE IN WHICH A HUMAN WORKER AND A ROBOTIC SYSTEM INTERACT
PROCÉDÉ DE DÉTECTION ET D'ÉVALUATION ASSISTÉES PAR ORDINATEUR D'UN FLUX DE TRAVAIL COMPRENANT UN OPÉRATEUR HUMAIN ET UN SYSTÈME ROBOTIQUE INTERAGISSANT

(30) Priorität: 06.08.2019 DE 102019211770
(43) Veröffentlichungstag der Anmeldung: 10.02.2021
(73) Patentinhaber: BIBA Bremer Institut für Produktion und Logistik GmbH, 28359 Bremen (DE); Pumacy Technologies AG, 06406 Bernburg (DE)
(72) Erfinder: Ghrairi, Zied, 28213 Bremen (DE); Heuermann, Aaron, 28219 Bremen (DE); Kirisci, Pierre, 28359 Bremen (DE); Kahlert, Toralf, 14548 Schwielowsee (DE)
(74) Vertreter: Fink Numrich Patentanwälte PartmbB

(56) Entgegenhaltungen:
- EP-A2- 2 772 811
- ROBIN SCHMUCKER: "Learning and Recognizing Activity Patterns with Sensor Data", 1 December 2017 (2017-12-01), XP055756900, Retrieved from the Internet <URL:http://www.clics-network.org/downloads/thesis_robin_schmucker.pdf> [retrieved on 20201204]
- YAN H ET AL: "General spatial features for analysis of multi-robot and human activities from raw position data", PROCEEDINGS OF THE 2002 IEEE/RSJ INTERNATIONAL CONFERENCE ON INTELLIGENT ROBOTS AND SYSTEMS. (IROS 2002). LAUSANNE, SWITZERLAND, SEPT. 30 - OCT. 4, 2002; [IEEE/RSJ INTERNATIONAL CONFERENCE ON INTELLIGENT ROBOTS AND SYSTEMS], NEW YORK, NY : IEEE, US, vol. 3, 30 September 2002 (2002-09-30), pages 2770 - 2775, XP010609511, ISBN: 978-0-7803-7398-3, DOI: 10.1109/IRDS.2002.1041689
- ALINA ROITBERG ET AL: "Multimodal Human Activity Recognition for Industrial Manufacturing Processes in Robotic Workcells", INTERNATIONAL CONFERENCE ON MULTIMODAL INTERACTION, ACM, 2 PENN PLAZA, SUITE 701 NEW YORK NY 10121-0701 USA, 9 November 2015 (2015-11-09), pages 259 - 266, XP058077356, ISBN: 978-1-4503-3912-4, DOI: 10.1145/2818346.2820738
- STEPHAN PULS ET AL: "Incorporating Online Process Mining Based on Context Awareness into Human- Robot-Cooperation Framework", 1 January 2013 (2013-01-01), XP055757986, Retrieved from the Internet <URL:https://www.thinkmind.org/download.php?articleid=intelli_2013_5_20_80090> [retrieved on 20201208]
- LIANG WANG ET AL: "Real-Time Activity Recognition in Wireless Body Sensor Networks: From Simple Gestures to Complex Activities", EMBEDDED AND REAL-TIME COMPUTING SYSTEMS AND APPLICATIONS (RTCSA), 2010 IEEE 16TH INTERNATIONAL CONFERENCE ON, IEEE, PISCATAWAY, NJ, USA, 23 August 2010 (2010-08-23), pages 43 - 52, XP031767719, ISBN: 978-1-4244-8480-5

## Beschreibung

Die Erfindung betrifft ein Verfahren und eine Vorrichtung zur rechnergestützten Erfassung und Auswertung eines Arbeitsablaufs, bei dem ein menschlicher Werker und ein robotisches System wechselwirken.

Aus dem Stand der Technik ist es bekannt, im Rahmen eines Arbeitsablaufs, bei dem ein menschlicher Werker und ein robotisches System miteinander interagieren, die Bewegungen des Werkers und des robotischen Systems zu erfassen. Beispielsweise offenbart das Dokument WO 2015/114089 A1 eine Sicherheitseinrichtung für einen Werker, bei dem über eine mobile, vom Werker zu tragende Erfassungseinrichtung der Werker im Arbeitsbereich einer bewegten automatischen Maschine lokalisiert wird, wobei bei einer Kollision oder Kollisionsgefahr mit der automatischen Maschine ein Warnsignal an den Werker übermittelt wird. Bis dato gibt es im Stand der Technik keine Ansätze, die mit entsprechenden Erfassungseinrichtungen erfasste Bewegungen eines Werkers und eines robotischen Systems einer Analyse unterziehen, um rechnergestützt die vom Werker bzw. vom robotischen System ausgeführten Arbeitstätigkeiten zu bestimmen.

Die Druckschrift EP 2 772 811 A2 zeigt ein Verfahren gemäß dem Oberbegriff des Patentanspruchs 1.

Aufgabe der Erfindung ist es, ein Verfahren und eine Vorrichtung zur rechnergestützten Erfassung und Auswertung eines Arbeitsablaufs zu schaffen, bei dem die erfassten Bewegungen eines Werkers und eines robotischen Systems einer umfassenden Analyse zur Extraktion von Arbeitstätigkeiten unterzogen werden.

Diese Aufgabe wird durch das Verfahren gemäß Patentanspruch 1 bzw. die Vorrichtung gemäß Patentanspruch 14 gelöst. Weiterbildungen der Erfindung sind in den abhängigen Ansprüchen definiert.

Im Rahmen des erfindungsgemäßen Verfahrens wird ein Arbeitsablauf, bei dem ein menschlicher Werker und ein robotisches System wechselwirken, erfasst und ausgewertet. Der Begriff des robotischen Systems ist dabei weit zu verstehen und kann je nach Ausgestaltung eine oder mehrere automatisch bewegte Maschinen (d.h. Roboter) umfassen. Gegebenenfalls kann das robotische System auch nur einen einzelnen Roboter enthalten.

Erfindungsgemäß werden basierend auf einer Erfassung mittels einer ersten Sensorik digitale Bewegungsdaten des Werkers ermittelt, welche eine Vielzahl von Positionsdatensätzen für eine Vielzahl von aufeinander folgenden Zeitpunkten enthalten, wobei jeder erste Positionsdatensatz Positionswerte zur Beschreibung der Position und Orientierung von Körperteilen des Werkers in einem ortsfesten Koordinatensystem zum jeweiligen Zeitpunkt enthält. Im Unterschied zu den ersten Positionsdatensätzen beziehen sich die weiter unten genannten zweiten Positionsdatensätze nicht auf die Position und Orientierung von Körperteilen des Werkers, sondern auf die Position und Orientierung von beweglichen Bauteilen des robotischen Systems. Der Begriff der ersten und zweiten Positionsdatensätzen ist weit zu verstehen. Es muss lediglich gewährleistet sein, dass sich aus den Positionswerten der Positionsdatensätze die Position und Orientierung von Körperteilen des Werkers bzw. von beweglichen Bauteilen des robotischen Systems im ortsfesten Koordinatensystem ergeben. Vorzugsweise beschreiben die Positionswerte der ersten und zweiten Positionsdatensätze die Position und Orientierung im dreidimensionalen Raum. Unter einem ortsfesten Koordinatensystem ist ein globales Koordinatensystem zu verstehen, das weder der Bewegung des Werkers noch der Bewegung des robotischen Systems folgt. Vorzugsweise sind das ortsfeste Koordinatensystem und die weiter unten genannten lokalen Koordinatensysteme dreidimensionale Koordinatensysteme.

Im erfindungsgemäßen Verfahrens werden ferner basierend auf einer Erfassung mittels einer zweiten Sensorik und/oder basierend auf kinematischen Steuerdaten des robotischen Systems digitale Bewegungsdaten des robotischen Systems ermittelt, welche eine Vielzahl von zweiten Positionsdatensätzen für eine Vielzahl von aufeinander folgenden Zeitpunkten enthalten, wobei jeder zweite Positionsdatensatz Positionswerte zur Beschreibung der Position und Orientierung von beweglichen Bauteilen des robotischen Systems in dem ortsfesten Koordinatensystem zum jeweiligen Zeitpunkt enthält.

Die oben beschriebenen Bewegungsdaten des Werkers bzw. des robotischen Systems stellen vorverarbeitete Rohdaten dar, die aus der ersten Sensorik bzw. der zweiten Sensorik bzw. der Steuerung des Roboters stammen. Je nach Ausgestaltung kann die Vorverarbeitung neben der eigentlichen Ermittlung der Positionsdatensätze verschiedene Schritte, wie beispielsweise eine Normierung von Sensordaten, eine Umrechnung in standardisierte Einheiten, Transformationen und dergleichen umfassen. Unter kinematischen Steuerdaten des robotischen Systems sind Steuerdaten für das robotische System zu verstehen, die dessen Bewegung bestimmen. Es gibt dabei bekannte Verfahren, die aus solchen Steuerdaten unter Verwendung des CAD- bzw. Kinematik-Modells des robotischen Systems die oben genannten Bewegungsdaten des robotischen Systems ermitteln. Ein solches bekanntes Verfahren wird im Rahmen des erfindungsgemäßen Verfahrens genutzt.

In einem weiteren Schritt des erfindungsgemäßen Verfahrens werden aus den digitalen Bewegungsdaten des Werkers und des robotischen Systems Bewegungsmuster ermittelt, welche in den digitalen Bewegungsdaten enthalten sind und welche erste Bewegungsmuster und zweite Bewegungsmuster umfassen. Die ersten Bewegungsmuster sind jeweils einer Bewegung des Werkers aus einer Vielzahl von vorgegebenen Bewegungen des Werkers zugeordnet. Demgegenüber sind die zweiten Bewegungsmuster jeweils einer Bewegung des robotischen Systems aus einer Vielzahl von vorgegebenen Bewegungen des robotischen Systems zugeordnet. Die Extraktion der Bewegungsmuster erfolgt basierend auf einer Mustererkennung unter Zugriff auf vorbekannte Bewegungsmuster. Diese vorbekannten Bewegungsmuster sind beispielsweise in einer Datenbank gespeichert. Es können dabei beliebige, aus dem Stand der Technik bekannte Verfahren zur Mustererkennung genutzt werden, um die ersten bzw. zweiten Bewegungsmuster zu bestimmen.

Nach der Bestimmung der Bewegungsmuster werden diese als Eingabedaten einem datengetriebenen Modell zugeführt, das über maschinelles Lernen basierend auf Trainingsdaten gelernt ist. Das datengetriebene Modell bestimmt dabei als Ausgabedaten Aktivitäten, die erste und zweite Aktivitäten umfassen. Die ersten Aktivitäten bilden Klassen, die jeweils ein oder mehrere erste Bewegungsmuster als eine Arbeitstätigkeit des Werkers aus einer Mehrzahl von vorgegebenen Arbeitstätigkeiten des Werkers spezifizieren. Mit anderen Worten entspricht eine erste Aktivität einer Arbeitstätigkeit des Werkers. In gleicher Weise bilden die zweiten Aktivitäten Klassen, welche jeweils eine oder mehrere zweite Bewegungsmuster als eine Arbeitstätigkeit des robotischen Systems aus einer Mehrzahl von vorgegebenen Arbeitstätigkeiten des robotischen Systems spezifizieren. Mit anderen Worten entspricht eine zweite Aktivität einer Arbeitstätigkeit des robotischen Systems. Erfindungsgemäß werden somit durch die Verwendung eines datengetriebenen Modells die ursprünglichen Bewegungsmuster entsprechenden Typen bzw. Klassen von Arbeitstätigkeiten zugeordnet. Die Arbeitstätigkeiten stellen folglich eine den Bewegungsmustern übergeordnete Klassifizierung der Bewegungen des Werkers bzw. des robotischen Systems dar.

Im erfindungsgemäßen Verfahren wird basierend auf den Aktivitäten eine Ausgabe über eine Benutzerschnittstelle zur Assistenz des Werkers generiert. Zum Beispiel kann der Werker über die Benutzerschnittstelle eine qualitative Rückmeldung erhalten, ob eine Arbeitstätigkeit korrekt ausgeführt wurde.

Je nach Ausgestaltung des erfindungsgemäßen Verfahrens können die Bewegungsmuster verschieden definiert werden. Ein Bewegungsmuster kann sich beispielsweise auf die Bewegung eines Fingers des Werkers, das Anheben eines Arms des Werkers, das Vorbeugen des Werkers, eine bestimmte Roboterbewegung und dergleichen beziehen. Im Gegensatz dazu werden durch die Aktivitäten bestimmte Bewegungsmuster zu Arbeitstätigkeiten abstrahiert. Dabei können unterschiedliche Bewegungsmuster ggf. auch zu gleichen Aktivitäten führen. Eine Aktivität kann beispielsweise einen vorbestimmten Montageschritt, einen vorbestimmten Transportschritt oder einen beliebigen anderen Arbeitsschritt festlegen.

In einer bevorzugten Variante des erfindungsgemäßen Verfahrens werden im Rahmen der Ermittlung der Bewegungsmuster zunächst aus den digitalen Bewegungsdaten des Werkers und des robotischen Systems Segmente extrahiert, welche erste Segmente und zweite Segmente umfassen. Die ersten Segmente umfassen jeweils erste Positionsdatensätze für mehrere aufeinander folgende Zeitpunkte und die zweiten Segmente umfassen jeweils zweite Positionsdatensätze für mehrere aufeinander folgende Zeitpunkte. Nach der Extraktion der Segmente werden aus diesen die Bewegungsmuster extrahiert, wobei die ersten Bewegungsmuster jeweils ein oder mehrere erste zeitlich aufeinander folgende Segmente umfassen und die zweiten Bewegungsmuster jeweils ein oder mehrere zweite zeitlich aufeinander folgende Segmente umfassen.

Je nach Ausgestaltung können die Segmente auf verschiedene Art und Weise bestimmt werden. In einer einfachen Variante sind die Segmente aufeinander folgende erste bzw. zweite Positionsdatensätze in einem Zeitfenster fester Länge. Gegebenenfalls kann bei der Segmentierung eine Assoziationsanalyse der Bewegungsdaten vorgenommen werden. Die Implementierung einer solchen Assoziationsanalyse liegt im Rahmen von fachmännischem Handeln. Durch eine Vorverarbeitung mittels einer Segmentierung kann die nachfolgende Mustererkennung einfach und effizient implementiert werden.

In einer weiteren bevorzugten Ausgestaltung werden die Aktivitäten einem Process-Mining unterzogen, wodurch Informationen zu einem oder mehreren Arbeitsprozessen gewonnen werden, die durch die Aktivitäten repräsentiert werden und im Arbeitsablauf enthalten sind. Somit werden erstmals Methoden des Process-Mining im Bereich der Kollaboration eines Werkers mit einem robotischen System eingesetzt. Process-Mining-Methoden sind an sich aus dem Stand der Technik bekannt und deren Implementierung im Bereich der Mensch-Roboter-Kollaboration liegt im Rahmen von fachmännischem Handeln. Neben der Identifikation von Arbeitsprozessen (Process Discovery) können über Process-Mining die identifizierten Arbeitsprozesse ggf. auch einem Prozessvergleich unterzogen werden bzw. Optimierungsmöglichkeiten für die identifizierten Prozesse ermittelt werden.

In einer bevorzugten Variante der obigen Ausführungsform wird basierend auf den Aktivitäten und den Informationen zu dem oder den Arbeitsprozessen die Ausgabe über die Benutzerschnittstelle zur Assistenz des Werkers generiert.

Das datengetriebene Modell, das im erfindungsgemäßen Verfahren zur Klassifikation der Bewegungsmuster in Aktivitäten verwendet wird, kann beliebig ausgestaltet sein.

Vorzugsweise basiert das datengetriebene Modell auf einem oder mehreren neuronalen Netzen, z.B. einem oder mehreren mehrschichtigen und/oder rekurrenten neuronalen Netzen, bzw. einem oder mehreren Bayesschen Netzen bzw. auf Support Vector Machines bzw. auf Entscheidungsbäumen. All diese datengetriebenen Modelle sind an sich bekannt und können mit geeigneten maschinellen Lernverfahren basierend auf Trainingsdaten gelernt werden. Je nach Ausgestaltung kann das gelernte datengetriebene Modell mittels überwachten Lernens oder mittels unüberwachten Lernens gelernt worden sein. Die Trainingsdaten sind in diesem Fall derart ausgestaltet, dass sie für eine Vielzahl von Gruppen aus einem oder mehreren Bewegungsmustern die der jeweiligen Gruppe zugeordnete Aktivität angeben.

In einer bevorzugten Ausführungsform des erfindungsgemäßen Verfahrens umfasst die erste Sensorik eine Vielzahl von körpernahen Sensoren, die unmittelbar oder mittelbar (z.B. integriert in Bekleidung) am Körper des Werkers angebracht sind, vorzugsweise mehrere Faser-Bragg-Gitter-Sensoren und/oder einen oder mehrere Lage- bzw. Orientierungs-Sensoren und/oder einen oder mehrere Beschleunigungs-Sensoren und/oder einen oder mehrere Inertialsensoren. Diese Sensoren sind aus dem Stand der Technik bekannt. Beispielsweise werden Faser-Bragg-Gitter-Sensoren, die am Körper eines Menschen angebracht sind, in dem Dokument US 2017/0354353 A1 beschrieben. Analog zu der ersten Sensorik kann auch die zweite Sensorik (falls vorhanden) derart ausgestaltet sein, dass sie eine Vielzahl von roboternahen Sensoren umfasst, die an einem oder mehreren beweglichen Bauteilen der robotischen Einrichtung angebracht sind. Auch diese Sensoren können als Faser-Bragg-Gitter-Sensoren bzw. LageSensoren bzw. Beschleunigungs-Sensoren bzw. Inertialsensoren ausgestaltet sein.

In einer bevorzugten Ausführungsform des erfindungsgemäßen Verfahrens werden über die Erfassung mittels der ersten Sensorik für ein jeweiliges Körperteil lokale Positionswerte in einem lokalen Koordinatensystem ermittelt, das dem jeweiligen Körperteil zugeordnet ist. Die Positionswerte der ersten Positionsdatensätze hängen dabei von den lokalen Positionswerten und einem Positionswert eines Referenzpunkts des Werkers im ortsfesten Koordinatensystem ab. Der Referenzpunkt des Werkers weist eine feste Positionsbeziehung zu den lokalen Koordinatensystemen auf. Alternativ oder zusätzlich werden über die Erfassung mittels der zweiten Sensorik und/oder aus den kinematischen Steuerdaten für ein jeweiliges bewegliches Bauteil des robotischen Systems lokale Positionswerte in einem lokalen Koordinatensystem ermittelt, das dem jeweiligen beweglichen Bauteil zugeordnet ist, wobei die Positionswerte der zweiten Positionsdatensätze von den lokalen Positionswerten und einem Positionswert eines Referenzpunkts des robotischen Systems im ortsfesten Koordinatensystem abhängen. Der Referenzpunkt des robotischen Systems weist eine feste Positionsbeziehung zu den lokalen Koordinatensystemen auf.

Je nach Ausgestaltung der soeben beschriebenen Variante kann der Referenzpunkt des Werkers bzw. des robotischen Systems ein fester oder beweglicher Referenzpunkt sein. Im Falle eines beweglichen Referenzpunkts umfasst die erste Sensorik vorzugsweise eine Lokalisationssensorik, mit welcher der (aktuelle) Positionswert des Referenzpunkts des Werkers im ortsfesten Koordinatensystem mit Hilfe einer Ortung basierend auf drahtlos übertragenen Signalen erfasst wird. Alternativ oder zusätzlich kann auch die zweite Sensorik eine Lokalisationssensorik umfassen, mit welcher der (aktuelle) Positionswert des Referenzpunkts des robotischen Systems im ortsfesten Koordinatensystem mit Hilfe einer Ortung basierend auf drahtlos übertragenen Signalen erfasst wird.

Für die oben beschriebene Ortung basierend auf drahtlosen Signalen können an sich bekannte Technologien genutzt werden, die z.B. auf Laufzeitmessungen bzw. Feldstärkemessungen beruhen. Beispielsweise kann die Lokalisationssensorik der ersten Sensorik und/oder die Lokalisationssensorik der zweiten Sensorik auf einer Ortung mittels Ultraschallsignalen und/oder mittels elektromagnetischer Hochfrequenzsignalen, vorzugsweise über Bluetooth und/oder UWB (UWB = Ultra-Wideband), basieren. Alternativ kann auch jedes andere Kurzstreckenfunk-basierte System als Lokalisationssensorik verwendet werden. Ebenso kann eine Lokalisation mittels eines oder mehrerer Laserscanner durchgeführt werden.

In einer weiteren bevorzugten Ausgestaltung des erfindungsgemäßen Verfahrens ist zumindest ein Teil der ersten Sensorik und vorzugsweise die gesamte erste Sensorik redundant ausgelegt, so dass durch die erste Sensorik ein oder mehrere Sätze von redundanten Messwerten erhalten werden, wobei die redundanten Messwerte eines jeweiligen Satzes unabhängig voneinander erfasst wurden und im Falle, dass die redundanten Messwerte eines jeweiligen Satzes um ein vorbestimmtes Maß voneinander abweichen, eine oder mehrere vorgegebene Aktionen automatisch ausgeführt werden. Alternativ oder zusätzlich kann auch zumindest ein Teil der zweiten Sensorik und vorzugsweise die gesamte zweite Sensorik redundant ausgelegt sein, so dass durch die zweite Sensorik ein oder mehrere Sätze von redundanten Messwerten erhalten werden, wobei die redundanten Messwerte eines jeweiligen Satzes unabhängig voneinander erfasst wurden und im Falle, dass die redundanten Messwerte eines jeweiligen Satzes um ein vorbestimmtes Maß voneinander abweichen, eine oder mehrere vorgegebenen Aktionen automatisch ausgeführt werden. Ein solches redundant ausgelegtes System ermöglicht eine funktional sichere Mensch-Roboter-Kollaboration.

Die oben beschriebenen Messwerte der ersten bzw. zweiten Sensorik können unmittelbar die erfassten Messrohdaten bzw. auch im Rahmen des Verfahrens vorverarbeitete Messwerte betreffen. Je nach Ausgestaltung können die vorgegebene Aktion bzw. vorgegebenen Aktionen unterschiedlich festgelegt werden. In einer Variante umfassen die vorgegebenen Aktionen eine Ausgabe über eine Benutzerschnittstelle, um hierdurch einen Benutzer darauf hinzuweisen, dass Messfehler vorliegen. Ebenso kann eine vorgegebene Aktion darin bestehen, dass das robotische System zur Vermeidung von Kollisionen angehalten wird.

In einer weiteren Ausgestaltung des erfindungsgemäßen Verfahrens wird überwacht, ob in regelmäßigen Zeitabständen Messwerte der ersten Sensorik und/oder der zweiten Sensorik über eine Datenübertragungsstrecke, die drahtgebunden oder drahtlos sein kann, übermittelt werden. Im Falle, dass die regelmäßigen Zeitabstände nicht eingehalten werden, werden eine oder mehrere vorgegebene Aktionen automatisch ausgeführt. Die Aktionen können beliebig ausgestaltet sein und insbesondere wiederum ein Anhalten des robotischen Systems bzw. die Ausgabe einer Warnmeldung über eine Benutzerschnittstelle umfassen. Der Fall, dass die regelmäßigen Zeitabstände nicht eingehalten werden, kann beispielsweise über einen vorgegebenen Schwellwert definiert sein, wobei dann, wenn ein Zeitabstand mehr als der vorgegebener Schwellwert von einem vorgegebenen regelmäßigen Zeitabstand abweicht, die vorgegebene Aktion bzw. die vorgegebenen Aktionen automatisch ausgeführt werden.

In einer weiteren Ausgestaltung des erfindungsgemäßen Verfahrens wird aus den digitalen Bewegungsdaten des Werkers und den digitalen Bewegungsdaten des robotischen Systems der minimale Abstand zwischen Werker und robotischem System berechnet und das robotische System wird in Abhängigkeit von diesem berechneten minimalen Abstand gesteuert. Vorzugsweise wird dabei die Geschwindigkeit des robotischen Systems umso kleiner, je geringer der minimale Abstand ist. Ebenso ist es möglich, dass das robotische System angehalten wird, wenn der minimale Abstand eine vorgegebene Schwelle unterschreitet. Auf diese Weise können Kollisionen des Werkers mit dem robotischen System verhindert werden.

In einer Variante der soeben beschriebenen Ausführungsform wird basierend auf der Erfassung mittels der zweiten Sensorik und/oder aus den kinematischen Steuerdaten des robotischen Systems und/oder basierend auf einer Erfassung mittels einer weiteren Sensorik ferner abgeleitet, ob zum jeweiligen Zeitpunkt ein oder mehrere Werkstücke mit vorbestimmten Abmessungen durch das robotische System gehalten werden, wobei die vorbestimmten Abmessungen von gehaltenen Werkstücken bei der Berechnung des minimalen Abstands dadurch berücksichtigt werden, dass das oder die gehaltenen Werkstücke als Teil des robotischen Systems behandelt werden. Hierdurch kann das Risiko von Kollisionen weiter vermindert werden. Um abzuleiten, ob ein oder mehrere Werkstücke mit vorbestimmten Abmessungen durch das robotische System gehalten werden, kann die weitere Sensorik z.B. Kraftmessdosen/6-Achs-Kraftmomentensensoren umfassen, um anhand des Gewichts sowie der Schwerpunkte und Trägheitsmomente zu erkennen, welches Werkstück aufgenommen wurde, und dann das richtige CAD-Modell des entsprechenden Werkstücks zur Distanzberechnung hinzuzuziehen.

Neben dem oben beschriebenen Verfahren betrifft die Erfindung eine Vorrichtung zur rechnergestützten Erfassung und Auswertung eines Arbeitsablaufs, bei dem ein menschlicher Werker und ein robotisches System wechselwirken, wobei die Vorrichtung eine Rechnereinrichtung zur rechnergestützten Ausführung des erfindungsgemäßen Verfahrens bzw. einer oder mehrerer bevorzugter Varianten des erfindungsgemäßen Verfahrens umfasst. Die Rechnereinrichtung kann dabei ggf. auf mehrere unterschiedliche Rechnereinheiten verteilt sein. Ferner ist die erste Sensorik und auch die zweite Sensorik (sofern vorhanden) Bestandteil der Rechnereinrichtung. Darüber hinaus enthält die Rechnereinrichtung ein Mittel zum Empfang von kinematischen Steuerdaten aus der Steuerung des robotischen Systems, sofern kinematische Steuerdaten bei der Ermittlung der digitalen Bewegungsdaten des robotischen Systems verarbeitet werden.

Ein Ausführungsbeispiel der Erfindung wird nachfolgend anhand der beigefügten Figuren detailliert beschrieben.

Es zeigen:
- Fig. 1: eine schematische Darstellung eines Systems, mit dem eine Ausführungsform des erfindungsgemäßen Verfahrens durchgeführt wird;
- Fig. 2: eine Detailansicht der körpernahen Sensorik aus Fig. 1;
- Fig. 3: eine Detailansicht des Lokalisationssystems aus Fig. 1; und
- Fig. 4: ein Flussdiagramm, das den Ablauf der Verarbeitung der Bewegungsdaten des Werkers und des Roboters aus Fig. 1 verdeutlicht.

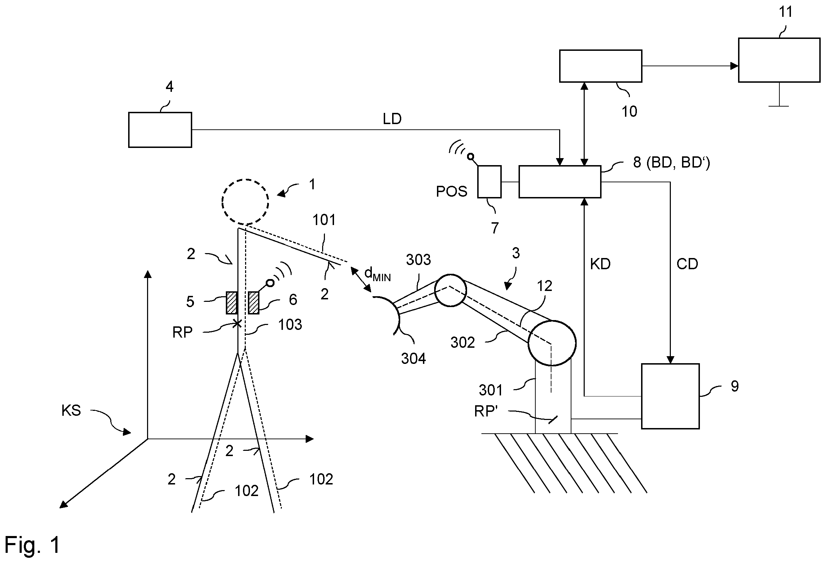

Das im Folgenden beschriebene System der Fig. 1 dient dazu, die Bewegungen eines menschlichen Werkers 1 sowie einer robotischen Einrichtung in der Form eines Roboters 3 zu erfassen, wobei der Werker und der Roboter miteinander wechselwirken. Basierend auf den erfassten Bewegungen wird der Roboter 3 mittels einer Robotersteuerung 9 geeignet gesteuert. Ferner werden rechnergestützt aus den Bewegungen des Werkers und des Roboters Aktivitäten und hieraus mittels Process-Mining Arbeitsprozesse abgeleitet. Diese Informationen können den Werker 1 bei der Ausführung seiner Tätigkeiten unterstützen.

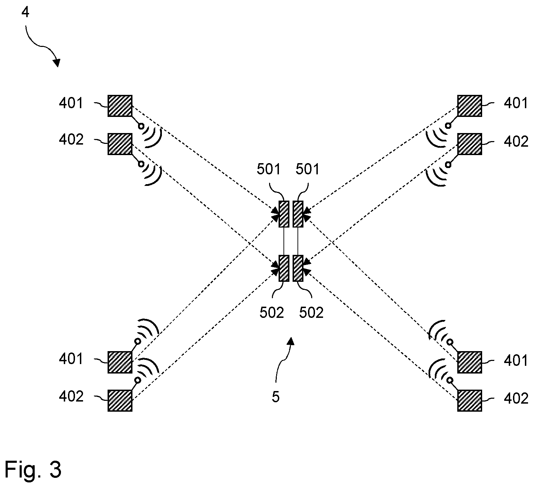

Der Werker 1 ist in Fig. 1 schematisch durch gestrichelte Linien dargestellt. Ein Arm des Werkers ist mit Bezugszeichen 101 bezeichnet und die beiden Beine des Werkers sind jeweils mit Bezugszeichen 102 bezeichnet. Ferner ist der Rumpf bzw. Rücken des Werkers mit Bezugszeichen 103 bezeichnet. Die Aufgabe der Lokalisierung des Werkers und dessen Körperteile 101 bis 103 wird zum einen mittels einer körpernahen Sensorik in der Form von Faser-Bragg-Gitter-Sensoren 2 und zum anderen über ein Lokalisationssystem erreicht, dass ein Basisstationssystem 4 sowie eine Transpondereinrichtung 5 umfasst, die näher aus Fig. 3 ersichtlich sind. Die Transpondereinrichtung 5 wird von Werker 1 getragen.

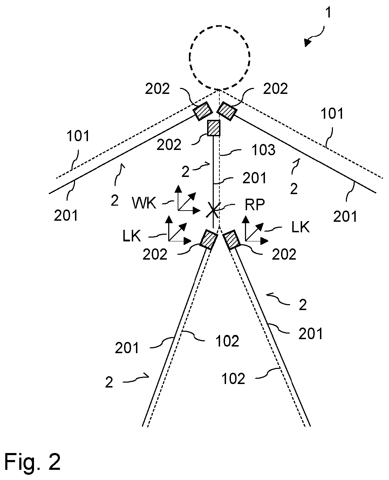

Zunächst wird im Folgenden die körpernahe Sensorik basierend auf den Faser-Bragg-Gitter-Sensoren 2 beschrieben. Die Funktionsweise dieser Sensorik ist an sich bekannt. Fig. 2 zeigt im größeren Detail den Aufbau der Sensorik. In dieser Figur ist der Werker wiederum mit Bezugszeichen 1 sowie seine Arme mit Bezugszeichen 101, seine Beine mit Bezugszeichen 102 und sein Rücken bzw. Rumpf mit Bezugszeichen 103 bezeichnet. Entlang dieser Körperteile erstreckt sich ein jeweiliger Faser-Bragg-Gitter-Sensor 2, der in an sich bekannter Weise jeweilige optische Fasern 201 sowie einen Interrogator 202 umfasst, das an einem Ende der jeweiligen Fasern vorgesehen ist und zum einen Licht mit einem vorgegebenen Frequenzspektrum mittels einer Lichtquelle in die entsprechende Faser sendet und zum anderen das Frequenzspektrum des durch die Faser reflektierten Lichts mittels eines faseroptischen Spektrometers erfasst. Die Fasern können punktuell beispielsweise mit Klettbändern fixiert werden oder fest in die Arbeitskleidung des Werkers (Weste, Jacke, Hose, Overall, Handschuhe) integriert werden. Gegebenenfalls können auch mehrere Fasern pro Körperteil vorgesehen sein.

Die einzelnen optischen Fasern 2 umfassen in der hier beschriebenen Ausführungsform jeweils Einzelkernfasern, in denen in einem einzelnen Faserkern mehrere Faser-Bragg-Gitter (z.B. FGB- Triplets) leicht versetzt oder parallel auf derselben Höhe im Faserkern eingebracht sind, um hierdurch mehrdimensionale Verbiegungen zu messen. Ein Faser-Bragg-Gitter zeichnet sich durch eine lokale periodische Variation der Brechzahl im entsprechenden Faserkern aus. Die Faser-Bragg-Gitter sind dabei an entsprechenden Knick- bzw. Biegestellen entlang der Körperteile, wie Schultergelenk, Ellenbogen, Handgelenk, Wirbelsäule, Hüfte und Knie, vorgesehen. Bei entsprechender Knick- bzw. Biegebewegung verändert sich das mit dem faseroptischen Spektrometer des Interrogators 202 erfasste Reflexionsspektrum. Durch die Verwendung mehrerer Faser-Bragg-Gitter an den jeweiligen Knick- bzw. Biegestellen können hierüber dreidimensionale Biegungen und torosiale Belastungen und Bewegung der Körperteile des Menschen in Echtzeit ermittelt werden. Anstatt der Verwendung einer Einzelkernfaser ist es ggf. auch möglich, eine Mehrkernfaser zu nutzen, in der die Faser-Bragg-Gitter separat in unterschiedlichen Faserkernen eingebracht sind.

Jeder faseroptische Interrogator 202 stellt eine Auswerteeinheit dar, die regelmäßig (alle paar Millisekunden) Daten über die 3D-Verformungen der Fasern zur Verfügung stellt. Diese Auswerteeinheit (auch mobiles faseroptisches Messgerät genannt) ist somit im Wesentlichen ein miniaturisiertes Spektrometer, das mit der Sensorfaser verbunden ist. Mit dem Spektrometer werden sowohl Emissionsspektren als auch Absorptionsspektren und Aussagen zur frequenzabhängigen Reflexion gewonnen. Diese werden anhand einer Software zur Formrekonstruktion (shape reconstruction) in ein 3D-Computermodell überführt. Hierfür werden zunächst anhand der bekannten Positionen der Faser-Bragg-Gitter bzw. FBG-Triplets innerhalb der Fasern sowie der (relativen) Amplituden der durch ein Faser-Bragg-Gitter j eweils adressierten Spektralbereiche die Biegeradien und Richtungen für die einzelnen Messpositionen (d.h. Positionen der Faser-Bragg-Gitter) berechnet. Mittels Positionen, Biegeradien und Richtungen können anschließend (und mit Interpolation) die kartesischen Koordinaten für jeden Messpunkt berechnet werden. Diese Daten ermöglichen ein Echtzeit-nahes digitales 3D-Abbild der Sensorfasern. Da die Sensorfasern am Körper oder der Arbeitskleidung des Werkers fixiert sind, entspricht das 3D-Abbild der Sensorfaser der Bewegung/Haltung der entsprechenden Gliedmaße. Somit kann anhand der Daten ein abstrahiertes digitales 3D-Modell der Gliedmaße erzeugt werden. Folglich ist die Aufgabe der faseroptischen Sensoren die Bestimmung der Orientierung und Position der Sensorfaser in Echtzeit relativ zu deren Ursprung.

Die 3D-Positionsdaten einer jeweiligen Sensorfaser beziehen sich auf ein lokales Koordinatensystem LK, das jeweils am Ursprung der Faser am Ort des Spektrometers liegt. In Fig. 2 sind beispielhaft zwei solcher lokaler Koordinatensysteme für die Faser-Bragg-Gitter-Sensoren der Beine 102 angedeutet. Die lokalen Koordinatensysteme LK haben ferner eine feste Positionsbeziehung zu einem Referenzpunkt RP des Werkers, an dem sich das Koordinatensystem WK des Werkers befindet. Die Daten über die 3D-Verformungen der Sensorfasern beziehen sich immer auf das entsprechende lokale Koordinatensystem. Indem die Ursprünge der Sensorfasern zueinander in Beziehung gesetzt werden, lassen sich die lokalen Koordinatensysteme in das (gemeinsame) Koordinatensystem WK des Werkers einordnen. Hierfür müssen die Distanzen zwischen verschiedenen Ursprüngen und Endpunkten der Sensorfasern festgelegt werden. Durch die Einordnung der lokalen Koordinatensysteme in das gemeinsame Koordinatensystem lassen sich die digitalen 3D-Modelle der Körperteile zu einem digitalen 3D-Modell des Menschen zusammensetzen. Das digitale 3D-Modell des Menschen ermöglicht jederzeit eine Aussage über die Bewegung bzw. aktuelle Körperhaltung des Werkers. Für die Erhöhung der Zuverlässigkeit können dabei die Fasern des faseroptischen Sensorsystem bzw. der körpernahen Sensorik in allen Körperteilen redundant vorgesehen sein.

Die 3D-Informationen der Spektrometer jedes Faser-Bragg-Gitter-Sensors werden in einer körpernahen Rechen- und Kommunikationseinheit zusammengeführt, die in Fig. 1 mit Bezugszeichen 6 bezeichnet ist und vom Werker getragen wird. Diese Rechen- und Kommunikationseinheit besteht im Wesentlichen aus einem sicheren Mikrocontroller, wie weiter unten näher beschrieben ist. Die Informationen der Spektrometer werden dabei kabelgebunden bzw. ggf. auch kabellos an die Rechen- und Kommunikationseinheit übermittelt, welche über eine Schnittstelleneinheit (z.B. eine Zusatzplatine des sicheren Mikrokontrollers) verfügt.

Ergänzend zu den Faser-Bragg-Gitter-Sensoren können ggf. auch an weiteren ausgewählten Punkten am Körper oder in der Kleidung des Werkers weitere Sensoren vorgesehen sein, wie Orientierungs-, Beschleunigungs- oder Inertialsensoren. Die Daten dieser Sensoren können ebenfalls in der oben erwähnten Schnittstelleneinheit zusammengeführt werden. Inertialsensoren sind eine Kombination aus Beschleunigungssensor, Gyroskop und Magnetometer. Durch die Nutzung verschiedener Sensortypen und Sensordaten können Fehler durch Messtoleranzen korrigiert und herausgerecht werden, so dass die Genauigkeit und Zuverlässigkeit sowie Funktionssicherheit gesteigert werden kann. Beispielsweise kann der Biegungswinkel eines Arms mit einem Faser-Bragg-Gitter-Sensor erfasst werden und zusätzlich die Orientierung des Arms über einen am Handgelenk befestigten Orientierungssensor gemessen werden. Beide Sensoren sollten übereinstimmende Messwerte liefern. Durch die Berücksichtigung beider Messwerte kann die gemessene Armhaltung bestätigt bzw. ggf. korrigiert werden.

Die Rechen- und Kommunikationseinheit besteht im Wesentlichen aus einem sicheren Mikrocontroller, der über redundante Prozessoren verfügt und einen automatischen Vergleich der Berechnungen der Prozessoren durchführt. Der funktional sichere Mikrocontroller wird für die sichere Sensordatenverarbeitung eingesetzt. Hierbei können sich funktional sichere Mikrocontroller an einer diskreten oder Multicore-Architektur orientieren. Bei einer diskreten Architektur sind zwei diskrete Mikrocontroller miteinander verbunden, wobei ein Mikrocontroller einen Steueralgorithmus ausführt, während der andere einen Überwachungsalgorithmus ausführt. Der Überwachungsalgorithmus bestätigt hierbei die Plausibilität des Steuerungsalgorithmus. Ein funktional sicherer Mikrocontroller wird immer dann verwendet, wenn im Rahmen von Robotikanwendungen nach der Norm ISO 13849 ein hohes Performance-Level (mindestens Performance-Level D Kategorie 3 bzw. SIL2) und eine Ausfallsicherheit gewährleistet werden muss.

Das körpernahe Sensorsystem aus den oben beschriebenen Faser-Bragg-Gitter-Sensoren und ggf. den zusätzlichen Orientierungs- bzw. Beschleunigungs- bzw. Inertialsensoren orientiert sich vorzugsweise ebenfalls an der funktionalen Sicherheit in Robotikanwendungen gemäß der Norm ISO 13849. Dies wird bei der Bewegungserfassung (Orientierung) durch eine redundante Messung erreicht, d.h. an jeder Messposition werden mindestens zwei Messpunkte angebracht. Vorzugsweise verlaufen zwei faseroptische Stränge parallel nebeneinander und werden durch separate Spektrometer ausgewertet. Die Resultate der Messungen werden dann von dem oben beschriebenen sicheren Mikrocontroller (diskrete oder Multicore-Architektur, Kategorie 3 nach ISO 13849) verglichen. Dabei muss jedoch sichergestellt werden, dass sich die redundanten Kanäle nicht gegenseitig beeinflussen können. Beide Kanäle werden hier kontinuierlich und gleichzeitig überwacht. Bei einer Abweichung der Messergebnisse der beiden Kanäle wird durch den Mikrocontroller ein Fehler festgestellt, der dann an den weiter unten beschriebenen Rechner 8 übermittelt wird, der wiederum veranlasst, dass ein sicherer Halt des Roboters 3 mittels der Robotersteuerung 9 durchgeführt wird.

Die körpernahe Rechen- und Kommunikationseinheit 6 wird mittels Akkumulatoren mit Energie versorgt. Die Einheit besitzt neben einer kabelgebundenen Schnittstelle, wie z.B. USB und LAN, eine drahtlose Schnittstelle zur Kommunikation der aufgenommenen Sensordaten der körpernahen Sensorik an eine externe Empfangseinheit 7. In Fig. 1 sind die an die Empfangseinheit 7 übertragenen Daten mit POS bezeichnet. Diese Daten stellen Positionsdaten der Sensorfasern der Faser-Bragg-Gitter-Sensoren in den jeweiligen lokalen Koordinatensystemen LK dar. Die Positionsdaten POS werden in regelmäßigen Zeitabständen (beispielsweise alle 25 ms) für aktualisierte Körperhaltungen an die Empfangseinheit 7 übermittelt. Die Empfangseinheit übernimmt dabei auch eine sog. Watchdog-Funktion. Gemäß dieser Funktion nimmt die Empfangseinheit die eintreffenden Datenpakete entgegen und erwartet ein Set bzw. eine Gruppe von Datensätzen in einer vorbestimmten Frequenz von der körpernahen Sensorik. Trifft in der erwarteten Zeit kein Set von Datensätzen ein, wurden Datensätze entweder nicht versendet oder sie sind auf der drahtlosen Übertragungsstrecke zwischen Rechen- und Kommunikationseinheit 6 und Empfangseinheit 7 verloren gegangen. Basierend auf der Watchdog-Funktion der Empfangseinheit 7 wird in einem solchen Fall ein Fehler ausgelöst, der den weiter unten beschriebenen Rechner 8 dazu veranlasst, den Roboter 3 anzuhalten.

Die Empfangseinheit 7 sowie die körpernahe Rechen- und Kommunikationseinheit 6 können beispielsweise als PROFINET/EtherCat-fähige Komponenten ausgestaltet sein und gegebenenfalls das Protokoll PROFIsafe/Safety-over-EtherCAT verwenden. Dabei kann die Empfangseinheit 7 mittels eines Ethernet-Kabels mit dem Rechner 8 verbunden sein. Der Rechner ist in diesem Fall ein Industrie-PC bzw. eine Software- oder Hardware-SPS (SPS = Speicherprogrammierbare Steuerung).

Um die lokalen Positionsdaten POS in Beziehung zu dem ortsfesten Koordinatensystem KS zu setzen, muss ferner die Bewegung des Werkers 1, d.h. von dessen Referenzposition RP, erfasst werden. Hierzu wird in der Ausführungsform der Fig. 1 ein Lokalisationssystem verwendet, das ein Basisstationssystem 4 und eine Transpondereinrichtung 5 umfasst und im Detail in Fig. 3 gezeigt ist. In der dort dargestellten Ausführungsform werden zur Lokalisation zwei unterschiedliche Technologien genutzt, um redundant die Referenzposition RP des Werkers 1 zu bestimmen.

Das Lokalisationssystem der Fig. 3 enthält ein erstes und ein zweites Lokalisationssystem. Das erste Lokalisationssystem sendet drahtlos Signale über vier Basisstationen 401 aus, wobei die Signale drahtlos von einem Paar von Transpondern 501 der Transpondereinrichtung 5 empfangen werden. Als Mindestvoraussetzung enthält das erste Lokalisationssystem drei Basisstationen und einen Transponder, wobei vorzugsweise eine größere Anzahl an Basisstationen und Transponder vorgesehen ist. Bei Empfang entsprechender Signale sendet jeder Transponder 501 ein Antwortsignal aus, das von den Basisstationen 401 wieder empfangen wird. Über eine Laufzeitmessung der jeweiligen Signale in den einzelnen Basisstationen 401 kann dann der Abstand zu den jeweiligen Transpondern 501 bestimmt werden und über Triangulation die Position der Transponder in Bezug auf das ortsfeste Koordinatensystem KS (siehe Fig. 1) bestimmt werden. Die beiden Transponder 501 stehen dabei in einer festen Positionsbeziehung zur Referenzposition RP, so dass die Referenzposition separat für jeden Transponder ermittelt werden kann. Die endgültige Referenzposition kann beispielsweise durch Mittelwertbildung der Referenzpositionen aller Transponder 501 erhalten werden, sofern die beiden Referenzpositionen nicht zu stark voneinander abweichen. Wird eine zu große Abweichung festgestellt, kann ein Fehler bei der Lokalisation festgestellt werden und der entsprechende Wert der Referenzposition verworfen werden. Durch die Verwendung von zwei oder ggf. mehr Transpondern für das entsprechende Lokalisationssystem kann die Zuverlässigkeit der Lokalisationsergebnisse verbessert werden und die entsprechende Referenzposition des Menschen bestätigt oder korrigiert werden.

Das erste Lokalisationssystem basierend auf den Basisstationen 401 und den Transpondern 501 ist ein sog. Ultrasonic-Beacon-basiertes Lokalisationssystem, bei dem als drahtlose Signale Ultraschallpulse durch die Basisstationen 401 und die Transponder 501 ausgesendet und empfangen werden. Nichtsdestotrotz kann auch eine andere Technologie für dieses Lokalisationssystem genutzt werden, z.B. basierend auf Bluetooth. In diesem Fall sind die drahtlosen Signale Hochfrequenz-Signale im Bluetooth-Frequenzbereich.

Neben dem ersten Lokalisationssystem basierend auf Basisstationen 401 und Transpondern 501 enthält das Lokalisationssystem der Fig. 3 ein zweites Lokalisationssystem, das analog zu dem ersten Lokalisationssystem vier Basisstationen 402 sowie ein entsprechendes Paar von Transpondern 502 umfasst. Die Transponder sind wiederum am menschlichen Werker 1 angebracht und Teil der Transpondereinrichtung 5. Als Mindestvoraussetzung enthält das zweite Lokalisationssystem drei Basisstationen und einen Transponder, wobei vorzugsweise eine größere Anzahl an Basisstationen und Transponder vorgesehen ist.

Das zweite Lokalisationssystem verwendet eine andere Technologie zur Lokalisation. Im hier beschriebenen Ausführungsbeispiel wird ein UWB-basiertes Lokalisationssystem genutzt, bei dem auf Basis der Ultrabreitband-Übertragungstechnik Signale durch die Basisstationen bzw. UWB-Anker 402 und die Transponder 502 ausgesendet bzw. empfangen werden. Der Vorgang der Lokalisation dieses zweiten Lokalisationssystems entspricht dem oben beschriebenen ersten Lokalisationssystem. Das heißt, die Lokalisation erfolgt über eine entsprechende Laufzeitmessung der Signale von jeweiligen Basisstationen zum Transponder und vom Transponder zurück zu den Basisstationen mit einer darauf basierenden Triangulation. Alternativ kann die Lokalisation auch über eine Messung der Eingangswinkel der Signale an den Basisstationen erfolgen.

Durch die Verwendung eines Ultrasonic-Beacon-basierten Lokalisationssystems als erstes Lokalisationssystem kann der Werker innerhalb von Gebäuden im Zentimeter-Bereich (ca. 2 cm) lokalisiert werden. Für eine genaue Lokalisation im dreidimensionalen Raum werden dabei mindestens drei Basisstationen benötigt, die auch als Kurzstreckenfunkbaken bezeichnet werden. Diese Kurzstreckenfunkbaken werden räumlich verteilt im Umfeld des Arbeitsplatzes des Werkers angebracht. Auch ein UWB-basiertes Lokalisationssystem ermöglicht die Bestimmung der Position des Werkers innerhalb von Gebäuden im Zentimeter-Bereich. Die Vorteile der Nutzung der UWB-Übertragungstechnik liegen in der außerordentlich hohen Präzision.

In der hier beschriebenen Ausführungsform wird sowohl durch das erste Lokalisationssystem als auch durch das zweite Lokalisationssystem der Referenzpunkt RP des Werkers 1 und damit der Ort des Koordinatensystems WK berechnet. Diese Berechnung erfolgt beispielsweise in einer vorgegebenen Basisstation der Basisstationen des ersten bzw. zweiten Lokalisationssystems, wobei die Laufzeiten von anderen Basisstationen zu der vorgegebenen Basisstation übermittelt werden, die dann über Triangulation die Referenzposition bestimmt.

Die Lokalisationsdaten LD in der Form der Referenzpositionen des ersten und zweiten Lokalisationssystems werden in der hier beschriebenen Ausführungsform drahtgebunden oder ggf. auch drahtlos an den Rechner 8 übertragen, wie in Fig. 1 angedeutet ist. In dem Rechner 8 wird ein kontinuierlicher Vergleich der Lokalisationsergebnisse des ersten und des zweiten Lokalisationssystems durchgeführt. Auf diese Weise lassen sich Messfehler identifizieren und die ermittelte Referenzposition des Menschen kann bestätigt oder korrigiert werden. Bei zu großen Abweichungen ist es ferner möglich, dass durch den Rechner 8 ein Befehl an die Robotersteuerung 9 zum Anhalten des Roboters 3 gegeben wird. Darüber hinaus können die Messdaten der jeweiligen Lokalisationssysteme, die mitunter zu springenden Positionen des Werkers führen können, unter anderem mit Filteralgorithmen, wie z.B. einem Kalman-Filter, bereinigt werden und somit die Ergebnisqualität verbessert werden.

In einer abgewandelten Ausführungsform des in Fig. 3 gezeigten Lokalisationssystems kann die Lokalisation auch derart ausgestaltet sein, dass die Bestimmung der Referenzposition für das erste und zweite Lokalisationssystem in einem der Transponder 501 bzw. 502 erfolgt, die der Werker 1 mit sich trägt. Die Referenzposition wird in diesem Fall von dem entsprechenden Transponder an die Rechen- und Kommunikationseinheit 6 übermittelt. Dabei wird die Laufzeitmessung von dem entsprechenden Transponder durchgeführt, wobei die Laufzeit von drahtlosen Signalen von den jeweiligen Transpondern zu den jeweiligen Basisstationen und dann wieder zurück zu den Transpondern gemessen wird. Die von den Transpondern ermittelten Referenzpositionen werden mit der Rechen- und Kommunikationseinheit 6 drahtlos an die Empfangseinheit 7 übertragen.

Wie bereits oben erwähnt, ist die Rechen- und Kommunikationseinheit 6 als funktional sicherer Mikrocontroller ausgestaltet. Somit kann dieser Mikrocontroller neben dem Abgleich der Sensordaten der Faser-Bragg-Gitter-Sensoren auch einen Abgleich der separat ermittelten Referenzpositionen der beiden Lokalisationssysteme durchführen. Eine drahtlose Übertragung der entsprechenden Referenzpositionen hin zu der Empfangseinheit 7 erfolgt dabei nur dann, wenn die Ergebnisse beider Lokalisationssysteme eine ausreichende Übereinstimmung aufweisen, wobei eine ausreichende Übereinstimmung basierend auf einem Schwellwertkriterium definiert sein kann. Ist dieses Schwellwertkriterium nicht erfüllt, wird ein Fehlercode zu der Empfangseinheit 7 übermittelt.

Mittels der lokalen Positionswerte POS der Faser-Bragg-Gitter-Sensoren sowie den Lokalisationsdaten LD betreffend die Referenzposition RP des Werkers 1 werden in dem Rechner 8 Bewegungsdaten BD bestimmt, welche entsprechende Positionswerte (d.h. die Position und Orientierung) der Körperteile des Werkers 1 im globalen Koordinatensystem KS zu aufeinander folgenden Zeitpunkten angeben. Die Bewegungsdaten BD entsprechen einem digitalen Menschmodell des Werkers 1 und beschreiben seine Bewegungen im Raum.

Darüber hinaus werden in der Ausführungsform der Fig. 1 von der Robotersteuerung 9 kinematische Steuerdaten KD an den Rechner 8 übermittelt. Die kinematischen Steuerdaten sind dabei an sich bekannte Daten und dienen zur Steuerung der Bewegungen der einzelnen beweglichen Bauteile 301 bis 304 des Roboters 3 relativ zu der festen, dem Roboter 3 zugeordneten Referenzposition RP'. Die beweglichen Bauteile des Roboters 3 sind in der Ausführungsform der Fig. 1 die drei aneinander angelenkten Roboterarme 301, 302 und 303 sowie der am Roboterarm 303 befestigte Greifer 304. Aus den kinematischen Steuerdaten KD ermittelt der Rechner 8 in an sich bekannter Weise unter Zugriff auf das Kinematik-Modell des Roboters 3 entsprechende Bewegungsdaten BD' (d.h. zeitlich aufeinander folgende Positionswerte in der Form von Position und Orientierung) der beweglichen Bauteile des Roboters in Bezug auf das globale Koordinatensystem KS. Die Bewegungsdaten BD' entsprechen einem digitalen Robotermodell des Roboters 3 und beschreiben dessen Bewegungen im Raum.

In der hier beschriebenen Ausführungsform wird unter Verwendung der Bewegungsdaten BD und BD' bestimmt, wie groß der minimale Abstand dₘᵢₙ zwischen dem Werker 1 und dem Roboter 3 ist. In Abhängigkeit von diesem minimalen Abstand werden dann durch den Rechner 8 Steuerdaten CD an die Robotersteuerung 9 gegeben, um auf die Bewegung des Roboters Einfluss zu nehmen. Dabei wird die Geschwindigkeit der Bewegung des Roboters umso kleiner eingestellt, je geringer der minimale Abstand dₘᵢₙ zwischen Werker 1 und Roboter 3 ist. Auf diese Weise wird die Gefahr von Kollisionen zwischen Roboter und Werker vermindert. Darüber hinaus besteht auch die Möglichkeit, dass im Falle, dass der minimale Abstand dₘᵢₙ einen Schwellenwert unterschreitet, ein Steuerbefehl von dem Rechner 8 an die Robotersteuerung 9 gegeben wird, der ein Anhalten des Roboters zur Vermeidung von Kollisionen bewirkt.

Gegebenenfalls besteht auch die Möglichkeit, dass mittels des digitalen Menschmodells basierend auf den Bewegungsdaten BD bzw. mittels des digitalen Robotermodells basierend auf den Bewegungsdaten BD' weitere Assistenzfunktionen bereitgestellt werden. Beispielsweise können anhand des digitalen Menschmodells unergonomische Arbeitshaltungen des Werkers identifiziert werden. Der Werker kann dann über ein geeignetes Informationssystem darüber aufgeklärt werden, wie er zukünftig seine Arbeit ergonomischer verrichten kann. Ebenfalls ist es denkbar, dass nach dem Erkennen einer unergonomischen Haltung des Werkers der Roboter dahingehend gesteuert wird, dass die Arbeitshöhe, in welcher der Werker arbeitet, bzw. die Höhe eines angereichten Werkstücks an die Körpergröße des Werkers angepasst wird und so eine ergonomische Haltung ermöglicht wird.

In einer weiteren Ausführungsform wird bei der Berechnung der minimalen Distanz zwischen Werker und Roboter auch berücksichtigt, ob der Roboter aktuell ein Werkstück an seinem Greifer 303 hält. Diese Information kann ebenfalls aus den kinematischen Steuerdaten des Roboters erhalten werden. In diesem Fall enthalten die kinematischen Steuerdaten die CAD-Daten des Werkstücks. Ergibt sich, dass der Roboter am Greifer ein Werkstück hält, fließt dies bei der Berechnung der minimalen Distanz zwischen Mensch und Roboter derart ein, dass auch vermieden wird, dass der Werker mit dem gehaltenen Werkstück kollidiert. Mit anderen Worten wird in diesem Fall das Werkstück derart behandelt, als ob es Bestandteil des robotischen Systems wäre.

Im Vorangegangenen wurde eine Ausführungsform beschrieben, bei der die Bewegungsdaten des Roboters aus seinen kinematischen Steuerdaten abgeleitet werden. Alternativ oder zusätzlich ist es jedoch auch möglich, dass das Konzept der körpernahen Sensorik des Werkers auf den Roboter übertragen wird. In diesem Fall werden analog zum Werker entsprechende Faser-Bragg-Gitter-Sensoren an den beweglichen Bauteilen des Roboters über seine Gelenke hinweg fixiert, z.B. mittels Gurten, Klettbändern und dergleichen. Mit anderen Worten wird der Roboter mit einer roboternahen Sensorik versehen, die in Fig. 1 lediglich schematisch durch eine gestrichelte Linie mit Bezugszeichen 12 angedeutet ist. Die Sensorfasern der Faser-Bragg-Gitter-Sensoren geben dann die relative Verformung bezüglich ihres lokalen Koordinatenursprungs aus. Folglich müssen die Sensorfasern, die jeweils die Gelenke des Roboters abdecken, in einer Beziehung zueinander und zu einem gemeinsamen Koordinatensystem gesetzt werden. Ausschlaggebend hierfür sind festgelegte statische Distanzen zwischen den Anfangs- und Endpunkten oder ein definierter Anfang der Sensorfaser am Roboter.

Genauso wie bei der körpernahen Sensorik werden die Daten der Faser-Bragg-Gitter wieder in einer Schnittstelleneinheit zusammengeführt und anschließend an eine Rechen- und Kommunikationseinheit weitergeleitet. Diese Einheit kann in Analogie zur körpernahen Sensorik wiederum einen sicheren Mikrocontroller mit redundanten Prozessen enthalten. Der Mikrocontroller leitet die Daten der roboternahen Sensorik an den Rechner 8 weiter, die dann das digitale Robotermodell in der Form von Bewegungsdaten BD' bestimmt.

In der Ausführungsform der Fig. 1 ist die Referenzposition RP' des Roboters 3 fest und vorbekannt, so dass auf ein Lokalisationssystem zur Bestimmung dieser Referenzposition verzichtet werden kann. Im Falle, dass der Roboter als Ganzes beweglich ist, kann j edoch auch die (aktuelle) Referenzposition RP' in Analogie zur Referenzposition RP des Werkers mittels eines Lokalisationssystems ermittelt werden und dann mit den lokalen Positionen der Faser-Bragg-Gitter-Sensoren verrechnet werden, um hierdurch Positionsdaten der beweglichen Bauteile des Roboters in Bezug auf das ortsfeste Koordinatensystem KS zu erhalten. In einer weiteren Ausgestaltung können die lokalen Positionen auch durch am Roboter angebrachte Transponder des im Vorangegangenen beschriebenen Lokalisationssystems bestimmt werden.

Je nach Ausgestaltung können die Sensorfasern der Faser-Bragg-Gitter-Sensoren auf verschiedene Weise an den Roboter angelegt werden, z.B. geradlinig, spiralförmig und dergleichen. Ferner kann die Zuverlässigkeit der ermittelten Positionsdaten durch Benutzung weiterer Sensoren wie Lagesensoren, Beschleunigungssensoren, Inertialsensoren und dergleichen weiter verbessert werden, wie dies auch bei der oben beschriebenen körpernahen Sensorik realisiert werden kann.

Die anhand von Fig. 1 erläuterten Komponenten, d.h. alle Komponenten bis auf die weiter unten beschriebenen Komponenten 10 und 11, stellen einen sog. Sicherheitszyklus des Gesamtsystems aus Werker und Roboter dar. Der Sicherheitszyklus beinhaltet alle sicherheitsrelevanten Komponenten des Systems. Hierzu gehören die körpernahe Sensorik mit den Sensoren 2 in Kombination mit dem Lokalisationssystem 4, 5 zur Erfassung der Bewegung des Werkers, die kinematischen Steuerdaten KD aus der Robotersteuerung 9 bzw. optional aus einer roboternahen Sensorik sowie die Rechen- und Kommunikationseinheit 6, die Empfangseinheit 7, der Rechner 8 und die Robotersteuerung 9. Durch diese Komponenten werden Bewegungsdaten sowohl für den Werker als auch für den Roboter sicher erfasst und an den Rechner 8 übermittelt.

Dort findet der sicherheitsrelevante Teil der Fusion der Daten statt, d.h. mittels der Daten wird ein kombiniertes Mensch-Maschine-Modell erstellt und sicherheitsrelevante Distanzen zwischen Mensch und robotischem System berechnet. Anhand dieser Berechnung erfolgt dann die distanzabhängige Geschwindigkeitssteuerung des Roboters, indem Steuerdaten bzw. Steuerbefehle CD von dem Rechner 8 an die Robotersteuerung 9 übermittelt werden.

Neben diesem Sicherheitszyklus gibt es in dem System der Fig. 1 einen weiteren nichtsicheren Mehrwertzyklus, der im Folgenden erläutert wird und einen wesentlichen Aspekt der Erfindung darstellt. Zur Realisierung dieses Mehrwertzyklus werden die Bewegungsdaten BD und BD' über eine geeignete Schnittstelle an eine weitere Rechnereinrichtung 10 übermittelt. Vorzugsweise erfolgt die Übertragung dieser Daten über das Internet und die Rechnereinrichtung 10 ist ein Internetserver. Die Kommunikation des Rechners 8 bzw. einer entsprechenden Schnittstelle mit dem Internetserver kann beispielsweise mittels sog. Representational State Transfer Services (REST) erfolgen. Der Internetserver 10 kann ggf. auch eine cloudbasierte Rechner- und Speichereinrichtung sein. Auf dem Server 10 werden die Bewegungsdaten BD und BD' dann weiterverarbeitet.

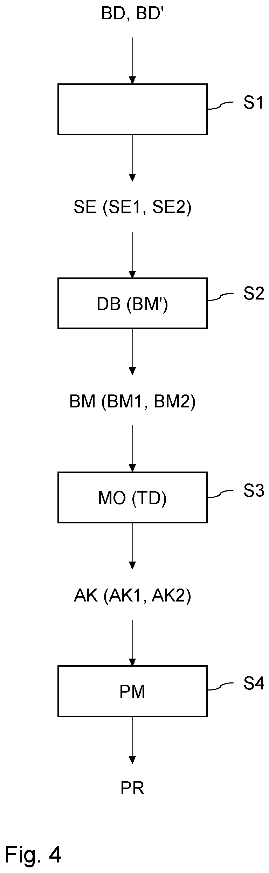

Die Weiterverarbeitung der Bewegungsdaten BD und BD' durch den Internetserver 10 ist in Fig. 4 dargestellt. Die Bewegungsdaten BD sind dabei eine zeitliche Abfolge von Positionsdaten der jeweiligen Körperteile des Werkers 1 in Bezug auf das Koordinatensystem KS, wohingegen die Bewegungsdaten BD' eine zeitliche Abfolge von Positionsdaten der jeweiligen beweglichen Bauteile des Roboters 3 in Bezug auf das Koordinatensystem KS darstellen. Wie sich aus Fig. 4 ergibt, werden aus den Bewegungsdaten BD und BD' in einem Schritt S1 zunächst (zeitliche) Segmente SE umfassend erste Segmente SE1 und zweite Segmente SE2 gewonnen. Die ersten Segmente SE1 stammen aus dem zeitlichen Strom der Bewegungsdaten BD, wohingegen die zweiten Segmente SE2 aus dem zeitlichen Strom der Bewegungsdaten BD' hervorgehen.

Die Einteilung der Bewegungsdaten BD und BD' in entsprechende Segmente kann mit an sich bekannten Methoden durchgeführt werden. Im einfachsten Fall wird ein Zeitfenster vorbestimmter Größe verwendet und aufeinander folgend alle Positionsdaten innerhalb dieses Fensters einem Segment zugeordnet. Gegebenenfalls kann die Segmentierung auch unter Verwendung einer an sich bekannten Assoziationsanalyse erfolgen, bei der Korrelationen in den Positionsdaten erkannt werden. Die Implementierung einer Assoziationsanalyse zur Ermittlung des Segmente SE1 und SE2 liegt im Rahmen von fachmännischem Handeln.

Nachdem erste Segmente SE1 und zweite Segmente SE2 aus den Bewegungsdaten BD und BD' extrahiert wurden, wird im nächsten Schritt S2 eine Mustererkennung sowohl für die ersten Segmente SE1 als auch für die zweiten Segmente SE2 durchgeführt. Hierdurch werden Bewegungsmuster BM umfassend erste Bewegungsmuster BM1 und zweite Bewegungsmuster BM2 erhalten. Die ersten Bewegungsmuster BM1 werden aus den ersten Segmenten SE1 betreffend die Bewegung des Werkers extrahiert, wohingegen die zweiten Bewegungsmuster BM2 aus den zweiten Segmenten SE2 betreffend die Bewegung des Roboters gewonnen werden. Die Bewegungsmuster werden mit Hilfe einer Datenbank DB ermittelt, in der eine Vielzahl von vorgegebenen Bewegungsmustern BM' enthalten sind. Ein jeweiliges vorgegebenes Bewegungsmuster umfasst dabei ein oder mehrere zeitlich aufeinander folgende Segmente sowie eine Spezifikation der dem Bewegungsmuster zugeordneten Bewegung, d.h. einen bestimmten Bewegungstyp, wie z.B. Bewegung des Fingers des Werkers, Anheben des Arms, Vorbeugen, Bewegung des Greifers des Roboters und dergleichen. Es gibt in der Datenbank DB Bewegungsmuster sowohl für die Bewegung des Werkers als auch für die Bewegung des Roboters.

In Schritt S2 wird eine an sich bekannte Mustererkennung verwendet, um die in den aufeinander folgenden Segmenten SE1 bzw. SE2 enthaltenen ersten bzw. zweiten Bewegungsmuster BM1 und BM2 durch Vergleich mit den vorgegebenen Bewegungsmustern BM' der Datenbank DB zu erhalten. Die Implementierung einer geeigneten Mustererkennung liegt im Rahmen von fachmännischem Handeln und kann beispielsweise auf einer Cluster-Analyse basieren. Vorzugsweise werden die erkannten Muster BM1 und BM2 als neu hinzukommende Muster in der Datenbank DB abgelegt, so dass die Anzahl der Muster BM' in der Datenbank erhöht wird und die Mustererkennung kontinuierlich verbessert wird.

In einem nächsten Schritt S3 werden die jeweiligen Bewegungsmuster BM1 und BM2 einem datengetriebenen Modell MO zugeführt, das zuvor über geeignete Trainingsdaten TD trainiert wurde. In der hier beschriebenen Ausführungsform besteht das datengetriebene Modell MO aus einem ersten Modell, dem eine vorgegebene Anzahl von zeitlich aufeinander folgenden ersten Bewegungsmuster BM1 als Eingabedaten zugeführt wird, und aus einem zweiten Modell, dem eine vorgegebene Anzahl von zeitlich aufeinander folgenden zweiten Bewegungsmustern BM2 als Eingabedaten zugeführt wird. Mit anderen Worten läuft ein Zeitfenster mit vorgegebener Größe (sog. Sliding Window) über die zeitliche Sequenz der ersten bzw. zweiten Bewegungsmuster, wobei die in der jeweiligen Position des Zeitfensters darin enthaltenen ersten bzw. zweiten Bewegungsmuster die Eingabedaten des entsprechenden datengetriebenen Modells bilden.

Als Ausgabe der jeweiligen datengetriebenen Modelle erhält man dann Aktivitäten AK, wobei erste Aktivitäten AK1 für entsprechende Bewegungsmuster BM1 und zweite Aktivitäten AK2 für entsprechende Bewegungsmuster BM2 erhalten werden. Durch die Aktivitäten erfolgt somit eine Klassifikation der Bewegungsmuster. Als Trainingsdaten für das jeweilige Modell wurden dabei bekannte Kombinationen von aufeinander folgenden ersten bzw. zweiten Bewegungsmustern gemäß dem Zeitfenster mit bekannter zugeordneter Aktivität verwendet. Die Aktivitäten geben dabei jeweilige Arbeitstätigkeiten des Werkers 1 (Aktivitäten AK1) bzw. Arbeitstätigkeiten des Roboters 3 (Aktivitäten AK2) im Kontext des betrachteten Arbeitsablaufs wieder (z.B. Greifen einer Schraube, Bewegung eines Werkstücks und dergleichen).

In der hier beschriebenen Variante beruht das datengetriebene Modell MO auf einer neuronalen Netzstruktur, die in an sich bekannter Weise mittels maschinellen Lernens basierend auf den Trainingsdaten TD gelernt ist. Die neuronale Netzstruktur enthält dabei ein oder mehrere neuronale Netze aus künstlichen Neuronen mit einer hohen Anzahl an versteckten Zwischenschichten (hidden layers), die über Deep Learning gelernt werden. Alternativ können auch andere datengetriebene Modelle in der Form entsprechender Klassifikations- bzw. Regressionsverfahren in Schritt S3 genutzt werden. Auch diese Modelle sind in geeigneter Weise über maschinelles Lernen basierend auf Trainingsdaten gelernt.

Nach der Identifikation der Aktivitäten AK1 und AK2 können diese abgespeichert und bei Bedarf über eine Benutzerschnittstelle 11 ausgegeben werden. Die Benutzerschnittstelle ist in Fig. 1 beispielhaft als visuelle Benutzerschnittstelle in der Form eines Bildschirms angedeutet. Die Benutzerschnittstelle ist für den Werker einsehbar, so dass er hierüber Informationen zu seinen Aktivitäten bzw. den Aktivitäten des Roboters erhält.

In der Ausführungsform der Fig. 4 werden die Aktivitäten AK in einem Schritt S4 noch weiterverarbeitet. In diesem Schritt wird ein Process-Mining PM durchgeführt. Process-Mining ist dabei an sich bekannt und beschreibt Techniken im Bereich des Prozessmanagements, welche die Analyse von Geschäftsprozessen auf Basis von Ereignisprotokollen unterstützten. Dieses Process-Mining wird nunmehr auf die Aktivitäten AK angewendet, wobei die Implementierung von Process-Mining für solche Aktivitäten im Rahmen von fachmännischem Handeln liegt. Zum Beispiel kann das O-pen-Source-Framework "ProM" hinzugezogen werden, um das Process-Mining umzusetzen. Process-Mining nutzt Techniken der Trenderkennung, Musteranalyse und Leistungsanalyse, um Geschäftsprozesse durch die Analyse der erzeugten Daten zu rekonstruieren und zu verbessern. Dieser Ansatz ermöglicht es, Prozesse von unten nach oben zu verbessern und zu automatisieren, auch wenn das zugrunde liegende Prozessmodell nicht bekannt oder sehr variabel ist. Als Ergebnis erhält man schließlich Informationen zu Arbeitsprozessen PR, die durch die Aktivitäten AK repräsentiert werden. In diesem Sinne werden eine oder mehrere zeitlich aufeinander folgende Aktivitäten als Arbeitsprozesse klassifiziert.

In einer konkreten Implementierung des Process-Minings PM werden dem Mining als Eingabedaten die Aktivitäten AK sowie ein oder mehrere vorgegebene Referenz-Arbeitsprozesse zugeführt. Die Referenz-Arbeitsprozesse sind dabei in der Form von Modellen in einer Datenbank abgelegt. Ein Referenz-Arbeitsprozess kann beispielsweise ein Montageprozess im Rahmen einer Mensch-Roboter-Kollaboration sein. Über bekannte Data-Mining-Techniken werden dann Informationen zu den Arbeitsprozessen gewonnen. In an sich bekannter Weise kann dabei eine Prozessidentifizierung, ein Prozessvergleich und eine Prozessoptimierung durchgeführt werden. Bei einer Prozessidentifizierung kann eine Sequenz- und Assoziationsmusteranalyse durchgeführt werden, wohingegen bei einem Prozessvergleich eine Mustererkennung (englisch: Pattern Matching) das geeignete Verfahren darstellt. Bei der Mustererkennung werden Aktivitäten des Ist-Prozesses mit den Aktivitäten eines oder mehrerer Referenz-Arbeitsprozesse verglichen. Als Ergebnis des Process-Minings erhält man einen oder mehrere identifizierte Arbeitsprozesse, das Ergebnis des Vergleichs der identifizierten Arbeitsprozessen mit Referenz-Arbeitsprozessen sowie Optimierungspotentiale für den identifizierten Prozess. Diese Informationen werden gespeichert und können bei Bedarf oder auch in Echtzeit über die Benutzerschnittstelle 11 zur Assistenz des Werkers ausgegeben werden.

Die im Vorangegangenen beschriebenen Ausführungsformen der Erfindung weisen eine Reihe von Vorteilen auf. Insbesondere werden robuste faseroptische Sensorverfahren basierend auf Faser-Bragg-Gitter-Sensoren mit hochfrequenten kommunikationstechnischen Verfahren zur Ortung kombiniert. Auf diese Weise werden Störeinflüsse, z.B. elektromagnetische Felder, Tageslicht, Frequenzbänder vorhandener IT-Netzwerke und dergleichen, minimiert. Durch die Kombination dieser beiden Verfahren werden die technischen industriellen Anforderungen an Echtzeitfähigkeit, Ortungsgenauigkeit und Messauflösung, Robustheit und Unempfindlichkeit gegen Störeinflüsse, Systemneutralität sowie nahtlose Integration in die Arbeitsumgebung erfüllt. Die körpernahe Sensorik ist darüber hinaus so ausgelegt, dass sie als funktional sicheres System angesehen werden kann. Dies wird durch die redundante Auslegung von Einzelkomponenten (mindestens zwei Sensoren an einer Messstelle) und durch den Einsatz funktional sicherer Mikrocontroller erreicht.

In einer Ausgestaltung wird auch der Roboter mit einer Sensorkombination in Analogie zur körpernahen Sensorik des Werkers ausgestattet. Dies führt dazu, dass zu jedem Zeitpunkt die Position des Roboters ermittelt werden kann. Auf diese Weise können unabhängig vom Hersteller die entsprechenden Positionsdaten des Roboters ohne Zugriff auf eine proprietäre Schnittstelle ermittelt werden. Nichtsdestotrotz ist es ggf. auch möglich, die Positionsdaten direkt aus der Steuerung des robotischen Systems auszulesen.

Die Erfindung ermöglicht darüber hinaus durch die Verwendung datengetriebener Modelle, die mit entsprechenden maschinellen Lernverfahren gelernt sind, Aktivitäten aus den erfassten Bewegungsdaten des Werkers und des Roboters abzuleiten. Darüber hinaus können diese Aktivitäten ggf. auch mit einem bekannten Verfahren des Process-Minings weiterverarbeitet werden, um hierdurch weitergehende Informationen zu den Arbeitsprozessen des Werkers in Wechselwirkung mit dem robotischen System zu erhalten.

## Patentansprüche

1. Verfahren zur rechnergestützten Erfassung und Auswertung eines Arbeitsablaufs, bei dem ein menschlicher Werker (1) und ein robotisches System (3) wechselwirken, wobei:
- basierend auf einer Erfassung mittels einer ersten Sensorik (2, 4, 5) digitale Bewegungsdaten (BD) des Werkers (1) ermittelt werden, welche eine Vielzahl von ersten Positionsdatensätzen für eine Vielzahl von aufeinander folgenden Zeitpunkten enthalten, wobei ein jeweiliger erster Positionsdatensatz Positionswerte zur Beschreibung der Position und Orientierung von Körperteilen (101, 102, 103) des Werkers (1) in einem ortsfesten Koordinatensystem (KS) zum jeweiligen Zeitpunkt enthält;
- basierend auf einer Erfassung mittels einer zweiten Sensorik (12) und/oder basierend auf kinematischen Steuerdaten (KD) des robotischen Systems (3) digitale Bewegungsdaten (BD') des robotischen Systems (3) ermittelt werden, welche eine Vielzahl von zweiten Positionsdatensätzen für eine Vielzahl von aufeinander folgenden Zeitpunkten enthalten, wobei ein jeweiliger zweiter Positionsdatensatz Positionswerte zur Beschreibung der Position und Orientierung von beweglichen Bauteilen (301, 302, 303, 304) des robotischen Systems (3) in dem ortsfesten Koordinatensystem zum jeweiligen Zeitpunkt enthält;
- aus den digitalen Bewegungsdaten (BD, BD') des Werkers (1) und des robotischen Systems (3) Bewegungsmuster (BM) ermittelt werden, welche in den digitalen Bewegungsdaten (BD, BD') enthalten sind und welche erste Bewegungsmuster (BM1) und zweite Bewegungsmuster (BM2) umfassen, wobei die ersten Bewegungsmuster (BM1) jeweils einer Bewegung des Werkers (1) aus einer Vielzahl von vorgegebenen Bewegungen des Werkers (1) zugeordnet sind und die zweiten Bewegungsmuster (BM2) jeweils einer Bewegung des robotischen Systems (3) aus einer Vielzahl von vorgegebenen Bewegungen des robotischen Systems (3) zugeordnet sind, wobei die Extraktion der Bewegungsmuster (BM) auf einer Mustererkennung unter Zugriff auf vorbekannte Bewegungsmuster (BM') basiert;
**dadurch gekennzeichnet, dass**
- die ermittelten Bewegungsmuster (BM) als Eingabedaten einem datengetriebenen Modell (MO) zugeführt werden, das über maschinelles Lernen basierend auf Trainingsdaten (TD) gelernt ist, wobei das datengetriebene Modell (MO) als Ausgabedaten Aktivitäten (AK) bestimmt, die erste und zweite Aktivitäten (AK1, AK2) enthalten, wobei die ersten Aktivitäten (AK1) Klassen bilden, die jeweils ein oder mehrere erste Bewegungsmuster (BM) als eine Arbeitstätigkeit des Werkers (1) aus einer Mehrzahl von vorgegebenen Arbeitstätigkeiten des Werkers (1) spezifizieren, und wobei die zweiten Aktivitäten (AK2) Klassen bilden, welche jeweils ein oder mehrere zweite Bewegungsmuster (BM) als eine Arbeitstätigkeit des robotischen Systems (3) aus einer Mehrzahl von vorgegebenen Arbeitstätigkeiten des robotischen Systems (3) spezifizieren;
- basierend auf den Aktivitäten (AK) eine Ausgabe über eine Benutzerschnittstelle (11) zur Assistenz des Werkers (1) generiert wird.

2. Verfahren nach Anspruch 1, **dadurch gekennzeichnet, dass** im Rahmen der Ermittlung der Bewegungsmuster (BM) zunächst aus den digitalen Bewegungsdaten (BD, BD') des Werkers (1) und des robotischen Systems (3) Segmente (SE) extrahiert werden, welche erste Segmente und zweite Segmente (SE1, SE2) umfassen, wobei die ersten Segmente (SE1) jeweils erste Positionsdatensätze für mehrere aufeinander folgende Zeitpunkte und die zweiten Segmente (SE2) jeweils zweite Positionsdatensätze für mehrere aufeinander folgende Zeitpunkte umfassen, wobei anschließend aus den Segmenten (SE) die Bewegungsmuster (BM) extrahiert werden, wobei die ersten Bewegungsmuster (BM1) jeweils ein oder mehrere erste zeitlich aufeinander folgende Segmente (SE1) umfassen und die zweiten Bewegungsmuster (BM2) jeweils ein oder mehrere zweite zeitlich aufeinander folgende Segmente (SE2) umfassen.

3. Verfahren nach Anspruch 1 oder 2, **dadurch gekennzeichnet, dass** die Aktivitäten (AK) einem Process-Mining (PM) unterzogen werden, wodurch Informationen zu einem oder mehreren Arbeitsprozessen (PR) gewonnen werden, die durch die Aktivitäten (AK) repräsentiert werden und im Arbeitsablauf enthalten sind.

4. Verfahren nach Anspruch 3, **dadurch gekennzeichnet, dass** basierend auf den Aktivitäten (AK) und den Informationen zu dem oder den Arbeitsprozessen (PR) die Ausgabe über die Benutzerschnittstelle (11) zur Assistenz des Werkers (1) generiert wird.

5. Verfahren nach einem der vorhergehenden Ansprüche, **dadurch gekennzeichnet, dass** das datengetriebene Modell (MO) auf einem oder mehreren neuronalen Netzen und/oder auf einem oder mehreren Bayesschen Netzen und/oder auf Support Vector Machines und/oder auf Entscheidungsbäumen beruht.

6. Verfahren nach einem der vorhergehenden Ansprüche, **dadurch gekennzeichnet, dass** die erste Sensorik (2, 4, 5) eine Vielzahl von körpernahen Sensoren (2) umfasst, die am Körper des Werkers (1) angebracht sind, vorzugsweise einen oder mehrere Faser-Bragg-Gitter-Sensoren und/oder einen oder mehrere Lagesensoren und/oder einen oder mehrere Beschleunigungssensoren und/oder einen oder mehrere Inertialsensoren, und/oder dass die zweite Sensorik (12) eine Vielzahl von roboternahen Sensoren umfasst, die an einem oder mehreren beweglichen Bauteilen (301, 302, 303, 304) der robotischen Einrichtung (3) angebracht sind, vorzugsweise einen oder mehrere Faser-Bragg-Gitter-Sensoren und/oder einen oder mehrere Lagesensoren und/oder einen oder mehrere Beschleunigungs-sensoren und/oder einen oder mehrere Inertialsensoren.

7. Verfahren nach einem der vorhergehenden Ansprüche, **dadurch gekennzeichnet, dass** über die Erfassung mittels der ersten Sensorik (2, 4, 5) für ein jeweiliges Körperteil (101, 102, 103) lokale Positionswerte in einem lokalen Koordinatensystem (LK) ermittelt werden, das dem jeweiligen Körperteil (101, 102, 103) zugeordnet ist, wobei die Positionswerte der ersten Positionsdatensätze von den lokalen Positionswerten und einem Positionswert eines Referenzpunkts (RP) des Werkers (1) im ortsfesten Koordinatensystem (KS) abhängen, wobei der Referenzpunkt (RP) des Werkers (1) eine feste Positionsbeziehung zu den lokalen Koordinatensystemen (LK) hat, und/oder dass über die Erfassung mittels der zweiten Sensorik (12) und/oder aus den kinematischen Steuerdaten (KD) für ein jeweiliges bewegliches Bauteil (301, 302, 303, 304) des robotischen Systems (3) lokale Positionswerte in einem lokalen Koordinatensystem ermittelt werden, das dem jeweiligen beweglichen Bauteil (301, 302, 303, 304) zugeordnet ist, wobei die Positionswerte der zweiten Positionsdatensätze von den lokalen Positionswerten und einem Positionswert eines Referenzpunkts (RP') des robotischen Systems (3) im ortsfesten Koordinatensystem (KS) abhängen, wobei der Referenzpunkt (RP') des robotischen Systems (3) eine feste Positionsbeziehung zu den lokalen Koordinatensystemen hat.

8. Verfahren nach Anspruch 7, **dadurch gekennzeichnet, dass** die erste Sensorik (2, 4, 5) eine Lokalisationssensorik (4, 5) umfasst, mit welcher der Positionswert des Referenzpunkts (RP) des Werkers (1) im ortsfesten Koordinatensystem (KS) mithilfe einer Ortung basierend auf drahtlos übertragenen Signalen erfasst wird, und/oder dass die zweite Sensorik (12) eine Lokalisationssensorik umfasst, mit welcher der Positionswert des Referenzpunkt (RP') des robotischen Systems (3) im ortsfesten Koordinatensystem (KS) mithilfe einer Ortung basierend auf drahtlos übertragenen Signalen erfasst wird.

9. Verfahren nach Anspruch 8, **dadurch gekennzeichnet, dass** die Lokalisationssensorik (4, 5) der ersten Sensorik (2, 4, 5) und/oder die Lokalisationssensorik der zweiten Sensorik (12) auf einer Ortung mittels Ultraschallsignalen und/oder mittels elektromagnetischer Hochfrequenzsignale, vorzugweise über Bluetooth und/oder UWB, basiert.

10. Verfahren nach einem der vorhergehenden Ansprüche, **dadurch gekennzeichnet, dass** zumindest ein Teil der ersten Sensorik (2, 4, 5) redundant ausgelegt ist, so dass durch die erste Sensorik (2, 4, 5) ein oder mehrere Sätze von redundanten Messwerten erhalten werden, wobei die redundanten Messwerte eines jeweiligen Satzes unabhängig voneinander erfasst wurden und im Falle, dass die redundanten Messwerte eines jeweiligen Satzes um ein vorbestimmtes Maß voneinander abweichen, eine oder mehrere vorgegebene Aktionen automatisch ausgeführt werden, und/oder dass zumindest ein Teil der zweiten Sensorik (12) redundant ausgelegt ist, so dass durch die zweite Sensorik (12) ein oder mehrere Sätze von redundanten Messwerten erhalten werden, wobei die redundanten Messwerte eines jeweiligen Satzes unabhängig voneinander erfasst wurden und im Falle, dass die redundanten Messwerte eines jeweiligen Satzes um ein vorbestimmtes Maß voneinander abweichen, eine oder mehrere vorgegebene Aktionen automatisch ausgeführt werden.

11. Verfahren nach einem der vorhergehenden Ansprüche, **dadurch gekennzeichnet, dass** überwacht wird, ob in regelmäßigen Zeitabständen Messwerte der ersten Sensorik (2, 4, 5) und/oder der zweiten Sensorik (12) über eine Datenübertragungsstrecke übermittelt werden, wobei im Falle, dass die regelmäßigen Zeitabstände nicht eingehalten werden, eine oder mehrere vorgegebene Aktionen automatisch ausgeführt werden.

12. Verfahren nach einem der vorhergehenden Ansprüche, **dadurch gekennzeichnet, dass** aus den digitalen Bewegungsdaten (BD) des Werkers (1) und den digitalen Bewegungsdaten (BD') des robotischen Systems (3) der minimale Abstand (dₘᵢₙ) zwischen Werker (1) und robotischem System (3) berechnet wird und das robotische System (3) in Abhängigkeit von dem berechneten minimalen Abstand (dₘᵢₙ) gesteuert wird.

13. Verfahren nach Anspruch 12, **dadurch gekennzeichnet, dass** basierend auf der Erfassung mittels der zweiten Sensorik (12) und/oder aus den kinematischen Steuerdaten (KD) des robotischen Systems (3) und/oder basierend auf einer Erfassung mittels einer weiteren Sensorik ferner abgeleitet wird, ob zum jeweiligen Zeitpunkt ein oder mehrere Werkstücke mit vorbestimmten Abmessungen durch das robotische System (3) gehalten werden, wobei die vorbestimmten Abmessungen von gehaltenen Werkstücken bei der Berechnung des minimalen Abstands (dₘᵢₙ) dadurch berücksichtigt werden, dass das oder die gehaltenen Werkstücke als Teil des robotischen Systems (3) behandelt werden.

14. Vorrichtung zur rechnergestützten Erfassung und Auswertung eines Arbeitsablaufs, bei dem ein menschlicher Werker (1) und ein robotisches System (3) wechselwirken, wobei die Vorrichtung eine Rechnereinrichtung umfasst, wobei die Rechnereinrichtung dazu eingerichtet ist, ein Verfahren durchzuführen, bei dem:
- basierend auf einer Erfassung mittels einer ersten Sensorik (2, 4, 5) digitale Bewegungsdaten (BD) des Werkers (1) ermittelt werden, welche eine Vielzahl von ersten Positionsdatensätzen für eine Vielzahl von aufeinander folgenden Zeitpunkten enthalten, wobei ein jeweiliger erster Positionsdatensatz Positionswerte zur Beschreibung der Position und Orientierung von Körperteilen (101, 102, 103) des Werkers (1) in einem ortsfesten Koordinatensystem (KS) zum jeweiligen Zeitpunkt enthält;
- basierend auf einer Erfassung mittels einer zweiten Sensorik (12) und/oder basierend auf kinematischen Steuerdaten (KD) des robotischen Systems (3) digitale Bewegungsdaten (BD') des robotischen Systems (3) ermittelt werden, welche eine Vielzahl von zweiten Positionsdatensätzen für eine Vielzahl von aufeinander folgenden Zeitpunkten enthalten, wobei ein jeweiliger zweiter Positionsdatensatz Positionswerte zur Beschreibung der Position und Orientierung von beweglichen Bauteilen (301, 302, 303, 304) des robotischen Systems (3) in dem ortsfesten Koordinatensystem (KS) zum jeweiligen Zeitpunkt enthält;
- aus den digitalen Bewegungsdaten (BD, BD') des Werkers (1) und des robotischen Systems (3) Bewegungsmuster (BM) ermittelt werden, welche in den digitalen Bewegungsdaten (BD, BD') enthalten sind und welche erste Bewegungsmuster (BM1) und zweite Bewegungsmuster (BM2) umfassen, wobei die ersten Bewegungsmuster (BM1) jeweils einer Bewegung des Werkers (1) aus einer Vielzahl von vorgegebenen Bewegungen des Werkers (1) zugeordnet sind und die zweiten Bewegungsmuster (BM2) jeweils einer Bewegung des robotischen Systems (3) aus einer Vielzahl von vorgegebenen Bewegungen des robotischen Systems (3) zugeordnet sind, wobei die Extraktion der Bewegungsmuster (BM) auf einer Mustererkennung unter Zugriff auf vorbekannte Bewegungsmuster (BM') basiert;
**dadurch gekennzeichnet, dass**
- die ermittelten Bewegungsmuster (BM) als Eingabedaten einem datengetriebenen Modell (MO) zugeführt werden, das über maschinelles Lernen basierend auf Trainingsdaten (TD) gelernt ist, wobei das datengetriebene Modell (MO) als Ausgabedaten Aktivitäten (AK) bestimmt, die erste und zweite Aktivitäten (AK1, AK2) enthalten, wobei die ersten Aktivitäten (AK1) jeweils ein oder mehrere erste Bewegungsmuster (BM) als eine Arbeitstätigkeit des Werkers (1) aus einer Mehrzahl von vorgegebenen Arbeitstätigkeiten des Werkers (1) klassifizieren und wobei die zweiten Aktivitäten (AK2) jeweils ein oder mehrere zweite Bewegungsmuster (BM) als eine Arbeitstätigkeit des robotischen Systems (3) aus einer Mehrzahl von vorgegebenen Arbeitstätigkeiten des robotischen Systems (3) klassifizieren;
- basierend auf den Aktivitäten (AK) eine Ausgabe über eine Benutzerschnittstelle (11) zur Assistenz des Werkers (1) generiert wird.

15. Vorrichtung nach Anspruch 14, **dadurch gekennzeichnet, dass** die Vorrichtung zur Durchführung eines Verfahrens nach einem der Ansprüche 2 bis 13 eingerichtet ist.

## Claims

1. A method for computer-assisted detection and evaluation of a workflow, in which a human worker (1) and a robotic system (3) interact, wherein:
- based on a detection by means of a first sensor system (2, 4, 5), digital movement data (BD) of the worker (1) are determined, which contain a plurality of first position data sets for a plurality of successive time points, wherein a respective first position data set contains position values for describing the position and orientation of body parts (101, 102, 103) of the worker (1) in a stationary coordinate system (KS) at the respective time point;
- based on a detection by means of a second sensor system (12) and/or based on kinematic control data (KD) of the robotic system (3), digital movement data (BD') of the robotic system (3) are determined, which contain a plurality of second position data sets for a plurality of successive time points, wherein a respective second position data set contains position values for describing the position and orientation of movable components (301, 302, 303, 304) of the robotic system (3) in the stationary coordinate system at the respective time point;
- from the digital movement data (BD, BD') of the worker (1) and of the robotic system (3), movement patterns (BM) are determined, which are contained in the digital movement data (BD, BD') and which comprise first movement patterns (BM1) and second movement patterns (BM2), wherein the first movement patterns (BM1) are each assigned to a movement of the worker (1) from a plurality of predefined movements of the worker (1) and the second movement patterns (BM2) are each assigned to a movement of the robotic system (3) from a plurality of predefined movements of the robotic system (3), wherein the extraction of the movement patterns (BM) is based on a pattern recognition with access to pre-known movement patterns (BM');
**characterized in that**
- the determined movement patterns (BM) are supplied as input data to a data-driven model (MO), which is trained via machine learning based on training data (TD), wherein the data-driven model (MO) determines as output data activities (AK), which contain first and second activities (AK1, AK2), wherein the first activities (AK1) form classes, which each specify one or more first movement patterns (BM) as a work activity of the worker (1) from a plurality of predefined work activities of the worker (1), and wherein the second activities (AK2) form classes, which each specify one or more second movement patterns (BM) as a work activity of the robotic system (3) from a plurality of predefined work activities of the robotic system (3);
- based on the activities (AK), an output is generated via a user interface (11) for assisting the worker (1).

2. The method according to claim 1, **characterized in that** during the determination of the movement patterns (BM), from the digital movement data (BD, BD') of the worker (1) and of the robotic system (3), segments (SE) are initially extracted, which comprise first segments and second segments (SE1, SE2), wherein the first segments (SE1) each comprise first position data sets for a several successive time points and the second segments (SE2) each comprise second position data sets for several successive time points, wherein from the segments (SE) the movement patterns (BM) are subsequently extracted, wherein the first movement patterns (BM1) each comprise one or more first temporally successive segments (SE1) and the second movement patterns (BM2) each comprise one or more second temporally successive segments (SE2).

3. The method according to claim 1 or 2, **characterized in that** the activities (AK) are subjected to a process mining (PM), whereby information is obtained about one or more work processes (PR), which are represented by the activities (AK) and are contained in the workflow.

4. The method according to claim 3, **characterized in that** based on the activities (AK) and the information about the one or more work processes (PR), the output is generated via the user interface (11) for assisting the worker (1).

5. The method according to one of the preceding claims, **characterized in that** the data-driven model (MO) is based on one or more neural networks and/or on one or more Bayesian networks and/or on support vector machines and/or on decision trees.

6. The method according to one of the preceding claims, **characterized in that** the first sensor system (2, 4, 5) comprises a plurality of near-body sensors (2), which are attached to the body of the worker (1), preferably one or more fiber Bragg grating sensors and/or one or more position sensors and/or one or more acceleration sensors and/or one or more inertial sensors, and/or **in that** the second sensor system (12) comprises a plurality of near-robot sensors, which are attached to one or more movable components (301, 302, 303, 304) of the robotic device (3), preferably one or more fiber Bragg grating sensors and/or one or more position sensors and/or one or more acceleration sensors and/or one or more inertial sensors.

7. The method according to one of the preceding claims, **characterized in that** via the detection by means of the first sensor system (2, 4, 5) for a respective body part (101, 102, 103), local position values are determined in a local coordinate system (LK), which is assigned to the respective body part (101, 102, 103), wherein the position values of the first position data sets depend on the local position values and a position value of a reference point (RP) of the worker (1) in the stationary coordinate system (KS), wherein the reference point (RP) of the worker (1) has a fixed positional relationship to the local coordinate systems (LK), and/or **in that** via the detection by means of the second sensor system (12) and/or from the kinematic control data (KD) for a respective movable component (301, 302, 303, 304) of the robotic system (3), local position values are determined in a local coordinate system, which is assigned to the respective movable component (301, 302, 303, 304), wherein the position values of the second position data sets depend on the local position values and a position value of a reference point (RP') of the robotic system (3) in the stationary coordinate system (KS), wherein the reference point (RP') of the robotic system (3) has a fixed positional relationship to the local coordinate systems.

8. The method according to claim 7, **characterized in that** the first sensor system (2, 4, 5) comprises a localization sensor system (4, 5), with which the position value of the reference point (RP) of the worker (1) in the stationary coordinate system (KS) is detected with the aid of a localization based on wirelessly transmitted signals, and/or **in that** the second sensor system (12) comprises a localization sensor system, with which the position value of the reference point (RP') of the robotic system (3) in the stationary coordinate system (KS) is detected with the aid of a localization based on wirelessly transmitted signals.

9. The method according to claim 8, **characterized in that** the localization sensor system (4, 5) of the first sensor system (2, 4, 5) and/or the localization sensor system of the second sensor system (12) is based on a localization by means of ultrasound signals and/or by means of electromagnetic high-frequency signals, preferably via Bluetooth and/or UWB.

10. The method according to one of the preceding claims, **characterized in that** at least a part of the first sensor system (2, 4, 5) is designed redundantly, so that one or more sets of redundant measured values are obtained by the first sensor system (2, 4, 5), wherein the redundant measured values of a respective set were detected independently of one another and in the case that the redundant measured values of a respective set deviate from one another by a predetermined amount, one or more predefined actions are carried out automatically, and/or **in that** at least a part of the second sensor system (12) is designed redundantly, so that one or more sets of redundant measured values are obtained by the second sensor system (12), wherein the redundant measured values of a respective set were detected independently of one another and in the case that the redundant measured values of a respective set deviate from one another by a predetermined amount, one or more predefined actions are carried out automatically.

11. The method according to one of the preceding claims, **characterized in that** it is monitored whether measured values of the first sensor system (2, 4, 5) and/or of the second sensor system (12) are transmitted at regular time intervals via a data transmission link, wherein in the case that the regular time intervals are not complied with, one or more predefined actions are carried out automatically.

12. The method according to one of the preceding claims, **characterized in that** the minimum distance (dₘᵢₙ) between the worker (1) and the robotic system (3) is calculated from the digital movement data (BD) of the worker (1) and the digital movement data (BD') of the robotic system (3), and the robotic system (3) is controlled as a function of the calculated minimum distance (dₘᵢₙ).

13. The method according to claim 12, **characterized in that** based on the detection by means of the second sensor system (12) and/or from the kinematic control data (KD) of the robotic system (3) and/or based on a detection by means of a further sensor system, it is further derived whether one or more workpieces with predetermined dimensions are held by the robotic system (3) at the respective time point, wherein the predetermined dimensions of held workpieces are taken into account in the calculation of the minimum distance (dₘᵢₙ) by treating the held workpiece or workpieces as part of the robotic system (3).

14. An apparatus for the computer-assisted detection and evaluation of a workflow, in which a human worker (1) and a robotic system (3) interact, wherein the apparatus comprises a computer means, wherein the computer means is configured to carry out a method in which:
- based on a detection by means of a first sensor system (2, 4, 5), digital movement data (BD) of the worker (1) are determined, which contain a plurality of first position data sets for a plurality of successive time points, wherein a respective first position data set contains position values for describing the position and orientation of body parts (101, 102, 103) of the worker (1) in a stationary coordinate system (KS) at the respective time point;
- based on a detection by means of a second sensor system (12) and/or based on kinematic control data (KD) of the robotic system (3), digital movement data (BD') of the robotic system (3) are determined, which contain a plurality of second position data sets for a plurality of successive time points, wherein a respective second position data set contains position values for describing the position and orientation of movable components (301, 302, 303, 304) of the robotic system (3) in the stationary coordinate system (KS) at the respective time point;
- from the digital movement data (BD, BD') of the worker (1) and of the robotic system (3), movement patterns (BM) are determined, which are contained in the digital movement data (BD, BD') and which comprise first movement patterns (BM1) and second movement patterns (BM2), wherein the first movement patterns (BM1) are each assigned to a movement of the worker (1) from a plurality of predefined movements of the worker (1) and the second movement patterns (BM2) are each assigned to a movement of the robotic system (3) from a plurality of predefined movements of the robotic system (3), wherein the extraction of the movement patterns (BM) is based on a pattern recognition with access to pre-known movement patterns (BM');
**characterized in that**
- the determined movement patterns (BM) are supplied as input data to a data-driven model (MO), which is trained via machine learning based on training data (TD), wherein the data-driven model (MO) determines as output data activities (AK), which contain first and second activities (AK1, AK2), wherein the first activities (AK1) each classify one or more first movement patterns (BM) as a work activity of the worker (1) from a plurality of predefined work activities of the worker (1) and wherein the second activities (AK2) each classify one or more second movement patterns (BM) as a work activity of the robotic system (3) from a plurality of predefined work activities of the robotic system (3);
- based on the activities (AK), an output is generated via a user interface (11) for assisting the worker (1).

15. The apparatus according to claim 14, **characterized in that** the apparatus is configured to carry out a method according to one of claims 2 to 13.

## Revendications

1. Procédé de détection et d'évaluation assistées par ordinateur d'un cycle d'opérations, lors duquel un opérateur humain (1) et un système robotique (3) interagissent, dans lequel :
- en se basant sur une détection au moyen d'un premier système de capteurs (2, 4, 5), des données de déplacement numériques (BD) de l'opérateur (1) sont déterminées, lesquelles contiennent une pluralité de premiers ensembles de données de position pour une pluralité d'instants successifs, dans lequel un premier ensemble de données de position respectif contient des valeurs de position pour la description de la position et l'orientation de parties corporelles (101, 102, 103) de l'opérateur (1) dans un système de coordonnées fixe (KS) à l'instant respectif ;
- en se basant sur une détection au moyen d'un second système de capteurs (12) et/ou en se basant sur des données de commande cinématiques (KD) du système robotique (3), des données de déplacement numériques (BD') du système robotique (3) sont déterminées, lesquelles contiennent une pluralité de seconds ensembles de données de position pour une pluralité d'instants successifs, dans lequel un second ensemble de données de position respectif contient des valeurs de position pour la description de la position et l'orientation de composants mobiles (301, 302, 303, 304) du système robotique (3) dans le système de coordonnées fixe à l'instant respectif ;
- des modèles de déplacement (BM) sont déterminés à partir des données de déplacement numériques (BD, BD') de l'opérateur (1) et du système robotique (3), lesquels sont contenus dans les données de déplacement numériques (BD, BD') et lesquels comprennent des premiers modèles de déplacement (BM1) et des seconds modèles de déplacement (BM2), dans lequel les premiers modèles de déplacement (BM1) sont chacun associés à un déplacement de l'opérateur (1) parmi une pluralité de déplacements prédéfinis de l'opérateur (1) et les seconds modèles de déplacement (BM2) sont chacun associés à un déplacement du système robotique (3) parmi une pluralité de déplacements prédéfinis du système robotique (3), dans lequel l'extraction des modèles de déplacement (BM) se base sur une reconnaissance de modèle avec accès à des modèles de déplacement connus au préalable (BM') ;
**caractérisé en ce que**
- les modèles de déplacement déterminés (BM) sont acheminés en tant que données d'entrée à un modèle guidé par les données (MO) qui est appris par le biais d'un apprentissage automatique se basant sur des données d'entraînement (TD), dans lequel le modèle guidé par les données (MO) détermine des activités (AK) à partir de données de sortie, qui contiennent des premières et secondes activités (AK1, AK2), dans lequel les premières activités (AK1) forment des classes qui spécifient chacune un ou plusieurs premiers modèles de déplacement (BM) en tant que travail de l'opérateur (1) parmi une pluralité de travaux prédéfinis de l'opérateur (1), et dans lequel les secondes activités (AK2) forment des classes qui spécifient chacune un ou plusieurs seconds modèles de déplacement (BM) en tant que travail du système robotique (3) parmi une pluralité de travaux prédéfinis du système robotique (3) ;
- une sortie est générée par le biais d'une interface utilisateur (11) pour l'assistance de l'opérateur (1) en se basant sur les activités (AK).

2. Procédé selon la revendication 1, **caractérisé en ce que** dans le cadre de la détermination des modèles de déplacement (BM), des segments (SE) sont d'abord extraits des données de déplacement numériques (BD, BD') de l'opérateur (1) et du système robotique (3), lesquels comprennent des premiers segments et des seconds segments (SE1, SE2), dans lequel les premiers segments (SE1) comprennent chacun des premiers ensembles de données de position pour plusieurs instants successifs et les seconds segments (SE2) comprennent chacun des seconds ensembles de données de position pour plusieurs instants successifs, dans lequel les modèles de déplacement (BM) sont ensuite extraits des segments (SE), dans lequel les premiers modèles de déplacement (BM1) comprennent chacun un ou plusieurs premiers segments successifs dans le temps (SE1) et les seconds modèles de déplacement (BM2) comprennent chacun un ou plusieurs seconds segments successifs dans le temps (SE2).

3. Procédé selon la revendication 1 ou 2, **caractérisé en ce que** les activités (AK) sont soumises à un process mining (PM) par lequel des informations concernant un ou plusieurs processus de travail (PR) sont obtenues, lesquelles sont représentées par les activités (AK) et sont contenues dans le cycle d'opérations.

4. Procédé selon la revendication 3, **caractérisé en ce que** la sortie est générée par le biais de l'interface utilisateur (11) pour l'assistance de l'opérateur (1) en se basant sur les activités (AK) et les informations concernant le ou les processus de travail (PR).

5. Procédé selon une des revendications précédentes, **caractérisé en ce que** le modèle guidé par les données (MO) repose sur un ou plusieurs réseaux neuronaux et/ou sur un ou plusieurs réseaux bayésiens et/ou sur des machines à vecteurs de support et/ou sur des arbres de décision.

6. Procédé selon une des revendications précédentes, **caractérisé en ce que** le premier système de capteurs (2, 4, 5) comprend une pluralité de capteurs proches du corps (2) qui sont appliqués sur le corps de l'opérateur (1), de préférence un ou plusieurs capteurs à fibres à réseaux de Bragg et/ou un ou plusieurs capteurs de position et/ou un ou plusieurs capteurs d'accélération et/ou un ou plusieurs capteurs d'inertie, et/ou que le second système de capteurs (12) comprend une pluralité de capteurs proches du robot qui sont appliqués sur un ou plusieurs composants mobiles (301, 302, 303, 304) de l'installation robotique (3), de préférence un ou plusieurs capteurs à fibres à réseaux de Bragg et/ou un ou plusieurs capteurs de position et/ou un ou plusieurs capteurs d'accélération et/ou un ou plusieurs capteurs d'inertie.

7. Procédé selon une des revendications précédentes, **caractérisé en ce que** des valeurs de position locales sont déterminées pour une partie corporelle respective (101, 102, 103) dans un système de coordonnées local (LK) qui est associé à la partie corporelle respective (101, 102, 103) par le biais de la détection au moyen du premier système de capteurs (2, 4, 5), dans lequel les valeurs de position des premiers ensembles de données de position dépendent des valeurs de position locales et d'une valeur de position d'un point de référence (RP) de l'opérateur (1) dans le système de coordonnées fixe (KS), dans lequel le point de référence (RP) de l'opérateur (1) a un rapport de position fixe aux systèmes de coordonnées locaux (LK), et/ou que des valeurs de position locales sont déterminées pour un composant mobile respectif (301, 302, 303, 304) du système robotique (3) dans un système de coordonnées local qui est associé au composant mobile respectif (301, 302, 303, 304) par le biais de la détection au moyen du second système de capteurs (12) et/ou à partir des données de commande cinématiques (KD), dans lequel les valeurs de position des seconds ensembles de données de position dépendent des valeurs de position locales et d'une valeur de position d'un point de référence (RP') du système robotique (3) dans le système de coordonnées fixe (KS), dans lequel le point de référence (RP') du système robotique (3) a un rapport de position fixe aux systèmes de coordonnées locaux.

8. Procédé selon la revendication 7, **caractérisé en ce que** le premier système de capteurs (2, 4, 5) comprend un système de capteurs de localisation (4, 5) avec lequel la valeur de position du point de référence (RP) de l'opérateur (1) est détectée dans le système de coordonnées fixe (KS) à l'aide d'une localisation se basant sur des signaux transmis sans fil, et/ou que le second système de capteurs (12) comprend un système de capteurs de localisation avec lequel la valeur de position du point de référence (RP') du système robotique (3) est détectée dans le système de coordonnées fixe (KS) à l'aide d'une localisation se basant sur des signaux transmis sans fil.

9. Procédé selon la revendication 8, **caractérisé en ce que** le système de capteurs de localisation (4, 5) du premier système de capteurs (2, 4, 5) et/ou le système de capteurs de localisation du second système de capteurs (12) se base sur une localisation au moyen de signaux ultrasonores et/ou au moyen de signaux électromagnétiques haute fréquence, de préférence par le biais de Bluetooth et/ou ULB.

10. Procédé selon une des revendications précédentes, **caractérisé en ce qu'**au moins une partie du premier système de capteurs (2, 4, 5) est conçue de manière redondante de sorte qu'un ou plusieurs ensembles de valeurs de mesure redondantes sont obtenus par le premier système de capteurs (2, 4, 5), dans lequel les valeurs de mesure redondantes d'un ensemble respectif ont été détectées indépendamment l'une de l'autre et dans le cas où les valeurs de mesure redondantes d'un ensemble respectif dévient l'une de l'autre d'une mesure prédéterminée, une ou plusieurs actions prédéfinies sont automatiquement réalisées, et/ou qu'au moins une partie du second système de capteurs (12) est conçue de manière redondante de sorte qu'un ou plusieurs ensembles de valeurs de mesure redondantes sont obtenus par le second système de capteurs (12), dans lequel les valeurs de mesure redondantes d'un ensemble respectif ont été détectées indépendamment l'une de l'autre et dans le cas où les valeurs de mesure redondantes d'un ensemble respectif dévient l'une de l'autre d'une mesure prédéterminée, une ou plusieurs actions prédéfinies sont automatiquement réalisées.

11. Procédé selon une des revendications précédentes, **caractérisé en ce qu'**il est surveillé si des valeurs de mesure du premier système de capteurs (2, 4, 5) et/ou du second système de capteurs (12) sont transmises par le biais d'un trajet de transmission de données à intervalles réguliers, dans lequel dans le cas où les intervalles réguliers ne sont pas respectés, une ou plusieurs actions prédéfinies sont automatiquement réalisées.

12. Procédé selon une des revendications précédentes, **caractérisé en ce que** l'écart minimal (dₘᵢₙ) entre opérateur (1) et système robotique (3) est calculé à partir des données de déplacement numériques (BD) de l'opérateur (1) et des données de déplacement numériques (BD') du système robotique (3), et le système robotique (3) est commandé en fonction de l'écart minimal calculé (dₘᵢₙ).

13. Procédé selon la revendication 12, **caractérisé en ce qu'**il est en outre conclu en se basant sur la détection au moyen du second système de capteurs (12) et/ou des données de commande cinématiques (KD) du système robotique (3) et/ou en se basant sur une détection au moyen d'un autre système de capteurs si une ou plusieurs pièces à usiner avec des dimensions prédéterminées sont maintenues par le système robotique (3) à l'instant respectif, dans lequel les dimensions prédéterminées de pièces à usiner maintenues sont prises en compte lors du calcul de l'écart minimal (dₘᵢₙ) **en ce que** la ou les pièces à usiner maintenues sont traitées comme partie du système robotique (3).

14. Dispositif de détection et d'évaluation assistées par ordinateur d'un cycle d'opérations, lors duquel un opérateur humain (1) et un système robotique (3) interagissent, dans lequel le dispositif comprend une installation informatique, dans lequel l'installation informatique est configurée pour réaliser un procédé, lors duquel :
- en se basant sur une détection au moyen d'un premier système de capteurs (2, 4, 5), des données de déplacement numériques (BD) de l'opérateur (1) sont déterminées, lesquelles contiennent une pluralité de premiers ensembles de données de position pour une pluralité d'instants successifs, dans lequel un premier ensemble de données de position respectif contient des valeurs de position pour la description de la position et l'orientation de parties corporelles (101, 102, 103) de l'opérateur (1) dans un système de coordonnées fixe (KS) à l'instant respectif ;
- en se basant sur une détection au moyen d'un second système de capteurs (12) et/ou en se basant sur des données de commande cinématiques (KD) du système robotique (3), des données de déplacement numériques (BD') du système robotique (3) sont déterminées, lesquelles contiennent une pluralité de seconds ensembles de données de position pour une pluralité d'instants successifs, dans lequel un second ensemble de données de position respectif contient des valeurs de position pour la description de la position et l'orientation de composants mobiles (301, 302, 303, 304) du système robotique (3) dans le système de coordonnées fixe (KS) à l'instant respectif ;
- des modèles de déplacement (BM) sont déterminés à partir des données de déplacement numériques (BD, BD') de l'opérateur (1) et du système robotique (3), lesquels sont contenus dans les données de déplacement numériques (BD, BD') et lesquels comprennent des premiers modèles de déplacement (BM1) et des seconds modèles de déplacement (BM2), dans lequel les premiers modèles de déplacement (BM1) sont chacun associés à un déplacement de l'opérateur (1) parmi une pluralité de déplacements prédéfinis de l'opérateur (1) et les seconds modèles de déplacement (BM2) sont chacun associés à un déplacement du système robotique (3) parmi une pluralité de déplacements prédéfinis du système robotique (3), dans lequel l'extraction des modèles de déplacement (BM) se base sur une reconnaissance de modèle avec accès à des modèles de déplacement connus au préalable (BM') ;
**caractérisé en ce que**
- les modèles de déplacement déterminés (BM) sont acheminés en tant que données d'entrée à un modèle guidé par les données (MO) qui est appris par le biais d'un apprentissage automatique se basant sur des données d'entraînement (TD), dans lequel le modèle guidé par les données (MO) détermine des activités (AK) à partir de données de sortie, qui contiennent des premières et secondes activités (AK1, AK2), dans lequel les premières activités (AK1) classifient chacune un ou plusieurs premiers modèles de déplacement (BM) en tant que travail de l'opérateur (1) parmi une pluralité de travaux prédéfinis de l'opérateur (1), et dans lequel les secondes activités (AK2) classifient chacune un ou plusieurs seconds modèles de déplacement (BM) en tant que travail du système robotique (3) parmi une pluralité de travaux prédéfinis du système robotique (3) ;
- une sortie est générée par le biais d'une interface utilisateur (11) pour l'assistance de l'opérateur (1) en se basant sur les activités (AK).

15. Dispositif selon la revendication 14, **caractérisé en ce que** le dispositif est configuré pour la réalisation d'un procédé selon une des revendications 2 à 13.
